# EUROPEAN PATENT APPLICATION

(11) **EP 4 261 704 A1**
(43) Date of publication of application: **18.10.2023**
(21) Application number: 22168527.4
(22) Date of filing: 14.04.2022
(51) Int. Cl.: G06F 16/2457

(54) **CATEGORY-BASED OPERATION OF A DBMS INFRASTRUCTURE**

(71) Applicant: Grunetal GmbH, 74855 Haßmersheim (DE)
(72) Inventor: JAKSCH, Jens, 74855 Haßmersheim (DE)
(74) Representative: Richardt Patentanwälte PartG mbB

(57) **Abstract**

The invention relates to a method for operating a DBMS infrastructure (102). The method is implemented by an interface application (104, {301, 303}) operatively coupled to the DBMS infrastructure. The method comprises:
-storing (202) a plurality of categories (108-116) in the DBMS infrastructure;
-storing (204) assignments (130) of one or more of the categories to one or more executable program routines (132-140) in the DBMS infrastructure;
-storing (206) data records (120-128, 514, 516, 518) in the DBMS (102) such that each of the data records is assigned to none, one or multiple ones of the plurality of categories, whereby at least some of the database records are assigned to multiple categories;
-providing (208) an interface (144) enabling an entity (308, 303) to dynamically modify the stored assignments;
-in response to receiving a data request, retrieve matching data records and their respectively assigned categories;
-processing (212) the retrieved data records with the executable program routines stored in association with the zero, one or multiple categories associated to each of the retrieved data records; and
-outputting (214, 600, 700) a result (602, 702, 704) of the processing.

## Description

### TECHNICAL FIELD

The invention relates to the technical field of data storage and retrieval, and more particularly to the field of operating an IT-infrastructure comprising one or more DBMSs.

### BACKGROUND

Data processing using conventional DBMSs is based on predefined data models. The data models relevant for the respective use case scenario or industry are either specified by the programs used for data acquisition or processing, or they are defined manually during the initial creation of the DBMS databases. The data models determine, for example, which attributes a data record of a certain type, e.g., "employee", "electric motor", "diesel engine" has. Every data record is assigned to only one such industry specific data model or data type. Often, the data is then processed using predefined rules and/or is output based on predefined database queries.

New data types have to be defined before importing data into the DMBS, so defining data models requires complex sophisticated planning ahead. Conventional approaches for operating a DBMS infrastructure have the disadvantage that the number and specific structure of the data records or object models that will be relevant in the future are difficult or impossible to predict in advance. In the course of time, it is often necessary to integrate new data of a different data type into the existing data stock or to perform new analyses.

For example, new scientific findings or organizational changes often come with new processing schemes from different perspectives corresponding to changes in the data model.

However, later integration of new data types into the data model is highly complicated and would often imply altering many existing data records in the DBMS (up to billions). Often, the new requirements or the newly added data are incompatible with the structure of existing data. A time-consuming manual step of cleansing and integrating the data is then required.

Sometimes, however, this integration is not possible at all or is too time-consuming, so that data sets for different requirements are then stored partly redundantly in different DBMSs and must be kept synchronized. This is time-consuming, error-prone and requires additional hardware, especially data storage and database servers as well as components for data synchronization. Other auxiliary solutions use rules for processing and integrating data of heterogeneous data models or extending existing types beyond their intended use, hampering intuitive use. These solutions are however highly restricted by the rules of the previously defined existing data model.

### SUMMARY

The invention provides for an improved method of operating an IT-infrastructure comprising one or more DBMS and a corresponding software application as specified in the independent patent claims. Embodiments of the invention are given in the dependent claims. Embodiments of the present invention can be freely combined with each other if they are not mutually exclusive.

In one aspect, the invention relates to an interface application operatively coupled to a DBMS infrastructure. The DBMS infrastructure comprises a DBMS and comprising one or more executable program routines. The interface application is configured to:
- store a plurality of categories in the DBMS infrastructure;
- store assignments of one or more of the categories to the one or more executable program routines in the DBMS infrastructure;
- store data records in the DBMS such that each of the data records is assigned to none, one or multiple ones of the plurality of categories, whereby at least some of the database records are assigned to multiple categories;
- provide an interface enabling an entity to dynamically modify:
   - the stored assignments of the categories to the data records; and
   - the stored assignments of the categories to the executable program routines;
- in response to receiving a data request, use the DBMS infrastructure to retrieve one or more of the data records and their respectively assigned categories which match the request;
- process each of the retrieved data records with the executable program routines stored in association with the zero, one or multiple categories associated to each of the retrieved data records; and
- output a result of the processing

For example, the processing of the retrieved data records may comprise processing data records having assigned no category in accordance with a default executable program routine or with the executable program routine(s) stored in association with the category or categories of the other retrieved data records having assigned at least one category.

Embodiments of the invention may have the advantage of an increased flexibility, maintainability and reduced storage and CPU consumption as various "workaround" solutions involving the redundant storage of multiple copies of the same data in different data structures and according to different data models. A user is enabled to modify the assignments of categories to data records and executable program routines which are used for processing and outputting the data records at runtime of the DBMS infrastructure used for managing the data records. Hence, in case it is necessary to modify or extend the data model (in particular: the attributes) of existing data records, or in case it is necessary to modify the way data is processed and output, it is not necessary any more to modify the internal structure of the data store used for storing the data records such as database tables. It is also not necessary to modify the source code of an application program configured to process and output the data records stored in the DBMS. It is also not necessary to process thousands or even millions of individual data record in order to adapt their attributes to a new object model for integrating the data record to the requirements of a new IT-environment. As the way the data records are processed and output is implemented in the executable program routines and as these routines are assigned to the data records only indirectly, via the categories, and as both the assignments of categories to data records and the assignments of executable program routines to the categories can easily be modified via the interface at runtime of the DBMS infrastructure, a user can easily modify the way all or some of the data records are processed on the category level. It is not necessary to traverse and modify millions of data record individually in order to integrate existing data records into a new IT-environment with different requirements as to how the records have to be processed and output. Hence, no mass alteration of existing data records is needed in many cases.

In addition, when the user introduces a new set of categories or a new set of executable program routines, the existing categories or program routines do not have to be adapted, which may cause unknown errors or conflicts. Only the assignments to some specific categories may be modified.

In a further beneficial aspect, no planning ahead regarding the structure of the object model and/or regarding the way data records should be processed and output to various entities (users, user roles, client programs, etc.) is needed: at any time, it is possible to introduce and assign a new category to existing data records and to assign new or different executable program routines to categories (and thereby indirectly also to the data records), thereby flexibly, efficiently, reversibly and with minimum computational overhead modifying the way the data record will be processed and output.

The new categories and executable program routines may be defined independently of previous categories or existing executable program routines. The new executable program routines can be freely assigned to all existing data records by assigning them to categories and by assigning the categories to the data records while working with the DBMS without overhead.

As the interface application allows the assignment of multiple categories to each data record, it is possible to assign multiple different executable processing rules to each data record via the categories. This may allow an entity to submit a data request which indicates one or more categories of interest, whereby the indicated category of interest determines the executable program routines used for processing the retrieved data records, because only those executable program routines may be executed which are assigned to the category or categories of interest. Hence, a user or client is enabled to flexibly specify, on a per-request-basis, not only which ones of the data records to be retrieved, but also how these data records are processed for generating a result, e.g. a report. This aspect may be particularly beneficial in the context of big data applications and machine learning or in situations when many different users or user roles are interested in different aspects of the same data. For example, a in the manufacturing sector, it is often necessary to generate various forms of reports based on a total data set, e.g. reports on components purchased, reports on the number of products manufactured over a period of time, reports on energy consumption, profit-loss accounts for tax purposes, etc. By assigning multiple different categories to production-associated data records, and by assigning different report-generation program routines to the respective categories, it is possible to generate different reports for different user-groups, whereby the number and types of reports can easily be extended and modified.

According to some embodiments, the interface enabling the entity to dynamically modify the assignments is or comprises a user interface, e.g. a GUI. In addition, or alternatively, the interface can be a service interface for receiving automatically generated requests, e.g. requests generated automatically by a client software or a client device. For example, the service interface can be a CRUD interface. The entity can be, for example, a user or a client software, e.g. a client application. The modification of the assignments can comprise adding new assignments, and/or deleting existing assignments and/or modifying existing assignments. The dynamic modification of the assignments can be implemented, for example, as a modification which is executed at runtime of the DBMS infrastructure, in particular at runtime of the IT-environment hosting the DBMS infrastructure, in particular the DBMS with the data records. For example, the dynamic modification can comprise modifying the assignments and/or the category and/or category specifications of the categories at runtime of the DBMS comprising the data records. The DBMS infrastructure can comprise a single or multiple DBMS. The DBMS infrastructure may in addition comprise a file storage for storing the executable program routines and optionally also accessory files which may be part of the data records. In other embodiments, the executable program routines can be stored in the DBMS as well. Depending on the embodiment, the categories and data records may be stored in different or in the same DBMS. The DBMS comprising the data records may be hosted on a single monolithic computer system or on a distributed computer system, e.g. a cloud computer system.

According to embodiments, the executable program routines comprise one or more program routines respectively being configured for creating at least a part of a graphical user interface (GUI). The processing of each of the retrieved data records comprises identifying the categories assigned to the retrieved data records and generating the GUI with one or more of the executable program routines stored in association with the identified categories. The outputting of the result comprises displaying attributes of the retrieved data records via the GUI parts created by the executable program routines to a user. The executable program routines which are not stored in association with the identified categories are not used for generating the GUI.

For example, the executable program routines used for creating a GUI may be configured to determine the attributes of a retrieved data record whose corresponding attribute value is to be displayed and/or various other aspects of the GUI such as data output fields, the layout of the GUI, the position of GUI elements, etc. For example, the program routines may determine if attributes of the retrieved data records should be presented in the form of a list, a table, a pie chart, a bar chart, a line chart, as .xls file, as animated video or the like, or may determine the position of these attribute values, charts, etc. within a GUI panel. Hence, even if a database query of a technical engineer for "category=CAR_PART_TYPE_X" returns the same list of car-part-related data records as another query for" category=ITEMS_BOUGHT in January 2020", the technical engineer having submitted the first query will see a GUI with different content than the user having submitted the second query, e.g. a user of the same company who works for the preparation of financial related reports for the tax authorities. So the attention of the technical engineer is not distracted by finance-related data which may be of interest for the user who generates the tax report and vice versa. In case the technical engineer should for whatever reason also require attribute values related to the price or other financial aspects, it is not necessary to modify the source code of the interface application program generating the report. It is sufficient to add a corresponding executable program routine which specifies that also the "price attribute" should be output, or to modify an existing reporting routine. According to one embodiment, at least some of the executable program routines used for processing the retrieved data records are JavaScript functions, scripts or libraries which may be executed in a browser used for processing the retrieved data records and for displaying the results in a browser application, e.g. a browser plugin. For example, the interface application or a client-side part (interface client application, P2P interface application) of a distributed interface application can be implemented as a browser-plugin.

According to embodiments, the interface application is configured to automatically create a service interface for retrieving data records assigned to a particular category. The service interface is created automatically in response to the creation and storing of the particular category in the DBMS infrastructure. Each service interface enables a client software to submit a request for retrieving the ones of the data records having assigned the category stored in association with the program routine having created the service interface. The request is received by the interface application via one of the service interfaces. According to some embodiments, the service interface is created using executable program routines which parse the categories and their features (as specified e.g. in the category specification of the category).

For example, the service interface can be a webservice interface, e.g. a REST (Representational State Transfer) service interface. For example, the service interfaces for the categories in the DBMS interface can be created by parser routines of the interface application or by parser routines specified in scripts whose execution is triggered by the interface application. The parsing of the categories and the category specification is performed automatically and repeatedly and/or in response to a modification of a category or category specification. The categories and category specifications are parsed for determining e.g. the name of the category, the valid and/or mandatory attributes etc. This information allows the interface application and/or the scripts used by the interface application to create a service interface which will retrieve selectively the ones of the attributes of the data records from the DBMS which represent valid attributes of this category. According to some examples the service interfaces are configured to provide the retrieved data records in JSON format via a Http-based network service interface.

According to preferred embodiments, the executable program routines have assigned metadata being indicative further constraints with regard to where, when and/or by whom the executable program routine can be executed and/or with regard to whether or not a copy of the executable program routine should be provided from the server-side part of the interface application to the client-side part for a client-side execution of the executable program module.

For example, some executable program routines originally stored in the DBMS infrastructure may have assigned metadata being indicative that the respective executable program routine should be executed by the client side (or server side) of an interface application having a client-server architecture. In addition, or alternatively, the metadata can specify that the executable program routine should only be executed if it is executed on a computer system currently located in a predefined geographic region, e.g. a particular country or city, or if the hardware and/or operating system of the computer to execute the executable program routine meets certain criteria, e.g. a minimum amount of memory or CPU capacity. For example, the service interface created for a category may publish and make available via a network executable program routines assigned to a category such that a client can use the service interface to trigger the server-side execution of these executable program routines for providing the requested data records.

According to one example, one of the categories may be the category "ZIPPABLE". When the service interface for this category is created, e.g. in the form of a webservice, e.g. a RESTFUL webservice, the service interface publishes the executable program routine(s) assigned to this category, thereby informing client applications that they can retrieve data records of the category "ZIPPABLE" such that a server-side program routine for zipping data records is executed and the one or more retrieved data records are provided via the service interface in the form of one or more zip-files.

The service interface for retrieving data records assigned to a particular category may allow a client program to submit a query to this interface for selectively retrieving data records having assigned at least the one of the categories whose creation or modification triggered the automated creation of the service interface.

This may be beneficial, because upon creation of a new category or upon the modification of an existing category, a service interface is created automatically which enables client programs to automatically retrieve data records having assigned said category. Hence, the operator of the interface application can be sure that any category stored in the DBMS infrastructure corresponds to a respective service interface and allows an automated, selective retrieval of data records assigned to this category. As the service interfaces are created automatically, the structure and syntax requirements of queries to be submitted to the service interfaces according to embodiments of the invention is predictable and constant, which is highly beneficial in the context of big data applications and machine-learning frameworks which often may benefit from mass queries for different sub-sets of data records or attributes.

According to embodiments, the categories in the DBMS infrastructure respectively have assigned a unique category-ID. The interface application and/or the DBMS infrastructure is configured to create at least one database index. The interface application is configured to provide a search interface enabling a search in the DBMS. The search uses one or more category-IDs as search keys for searching the at least one index. Each index entry of the at least one index represents one of the plurality of categories and comprises pointers towards all of the data records having assigned the one category.

This can have the advantage that each of the categories corresponds to an index, allowing a quick category-based search. In some embodiments, the interface application is configured to generate these indexes, e.g., automatically in response to the creation of a new category. In other embodiments, the category index is managed by the DBMS and the DBMS is configured to create the indices (automatically or in response to a command of the interface application submitted to the DBMS). When a category is reassigned or revoked from a data record, or after a predefined time interval has lapsed, the index is updated accordingly. It is not necessary to perform a sequential scan of all the data records in order to determine if a record has assigned the category of interest.

According to embodiments, the categories respectively have assigned a unique category-ID. The interface application is configured to:
- determine that the totality of data records in the DBMS respectively having assigned all of two or more category-IDs exceed a threshold criterion;
- if the threshold criterion is exceeded, trigger the creation of a category-ID referred to as intersectional category-ID as a function of the two or more category-IDs;
- check if the intersectional category-ID already exists in the DBMS infrastructure;
- if and only if the intersectional category-ID does not yet exist in the DBMS infrastructure and if the totality of data records in the DBMS respectively having assigned the two or more category-ID exceed the threshold criterion:
   - automatically create a new category and store the newly created category in association with the created intersectional category-ID in the DBMS infrastructure, the created category representing an intersection of all of the two or more categories;
   - assign the intersectional category-ID to the data records determined to have assigned all of the two or more category-IDs; and
   - use the intersectional category-ID for searching the data records in the DBMS for data records respectively having assigned all the two or more categories.

The automatically created, new category may also be referred to as "intersectional category". For example, the DBMS may comprise 100.000 data records having assigned the category "electric engine". 30.000 of them may have assigned the additional category "manufacturerA", 60.000 of them may have assigned the category "manufacturerB". Now a new "electric engine, and 10.000 of them may not have assigned a category being indicative of the manufacturer. The category "electric engine" may have the category-ID "EE", the "manufacturerA" category may have the category "MA" and the "manufacturerB" category may have the category "MB". As the DBMS comprises 30.000 records having assigned both the category-ID "EE" and "MA", the intersectional category ID for these two categories may have already been created automatically, e.g. as a concatenation of category-IDs, e.g. "EEMA". As the DBMS comprises 60.000 records having assigned both the category-ID "EE" and "MB", the intersectional category ID for these two categories may have already been created automatically, e.g. as a concatenation of category-IDs, e.g. "EEMB". Now a user may assign one of the electric engine data records not having assigned a manufacturer category the category "manufacturerC". This event may trigger the creation of the intersectional category ID for these two categories e.g. as a concatenation of category-IDs, e.g. "EEMC". The intersectional categories are assigned automatically by the interface application to all data records having assigned all categories forming the basis for the intersectional category. In this example, the intersectional category is based on an intersection of two categories, but categories of three or four or even more categories may likewise be generated automatically. In some embodiments, an index is created automatically for each of the automatically created intersectional categories.

According to embodiments, the interface application is configured to monitor the categories assigned to each of the data records. In case a category is removed from a data record, also the intersectional categories which are based on the removed category are removed from the data record automatically by the interface application. So, in case the category "MA" is removed from a data record, also the intersectional category "EEMA" is removed from this data record.

The trigger for the creation and assignment of intersectional categories, which is referred herein as "threshold criterion", may be the event of assigning the two or more categories the intersectional category is based on the first time to a data record. In other example embodiments, the "threshold criterion" may be fulfilled based on other criteria, e.g., when the two or more categories the intersectional category is based on is assigned to more than a minimum number of data records, e.g. at least 100 or at least 1000 data records.

This may have the advantage that the speed of data retrieval is further accelerated: often, users and client programs are interested to retrieve data records having several categories, e.g. machine parts of a particular type and of a particular manufacturer and/or having a particular desired property. Using a category-based index for each of the multiple categories specified in the search/data request may already tremendously accelerate the search. Nevertheless, it may be necessary to compute an intersection of the data record IDS matching the different categories of interest to obtain the sub-set of data records having assigned all categories of interest. This step may require a significant amount of main memory to load the data record-IDs temporarily into the main memory. This step may be omitted by automatically creating intersectional categories and corresponding indices. The interface application may be configured to automatically determine if an intersectional category exists based on all or a sub-set of the categories of interest specified in the data request. For example, the interface application may use a rule to generate an alphabetic ordering of categories and then create an intersectional category ID as a concatenation of the IDs of the multiple categories. Other approaches for computing intersectional categories may exist as well, e.g. the computing of a hash value from an ordered sequence of multiple category-IDs etc. In case an intersectional category and respective intersectional category ID exists for two or more of the categories of interest, the interface application will use the index of the intersectional category instead of the multiple individual indices of the two or more categories for performing the search. This may accelerate the retrieval process and reduce memory consumption, as the computation of intersections of multiple category-specific data record ID subsets is avoided.

The category-IDs and intersectional category-IDs may have any data type and can be, for example, an alphanumeric character string. Preferably, the category-IDs and intersectional category-IDs are numbers, e.g. decimal numbers.

According to embodiments, the determination that the totality of data records exceeds the threshold criterion and the creation and storing of the new category and the new category-ID are performed in response to receiving a search request.

The search request may comprise the two or more category-IDs (being of interest to the entity having submitted the request).

According to embodiments, the use of the intersectional category-ID for searching the data records in the DBMS by the interface application comprises: receiving a search request comprising an indication of the category-IDs of two or more categories of interest; creating the category-ID of the intersectional category as a function of the category-IDs of two or more categories of interest, e.g. by means of a concatenation, a hash function or any other algorithm to derive a data value from multiple other values in a reproducible and unambiguous manner. Then, the interface application uses the created category-ID of the intersectional category as search key instead of the two or more category-IDs for retrieving all data records respectively having assigned all of the two or more categories indicated in the request when performing the search.

According to embodiments, the interface application is configured to determine that the totality of data records in the DBMS respectively having assigned the two or more category-ID exceed the threshold criterion, if the number of the totality of data records respectively assigned to all of the two or more category-IDs exceeds a predefined threshold number. For example, the number can be a number greater than 0, a number greater than 1000, a number greater than 100000 etc. A suitable threshold may depend e.g. on the amount of main memory available or on other factors.

According to another embodiment, the interface application is configured to determine that the totality of data records exceed the threshold criterion if the time for retrieving the totality of data records respectively assigned to all of the two or more category-IDs using the two or more category-IDs as search keys exceeds a predefined time threshold. For example, in case the time for retrieving the data records exceeds a predefined maximum time of e.g. more than 0.5 seconds, or more than 1 second, or more than 2 seconds, etc., the threshold criterion may be considered to be exceeded.

According to another embodiment, the interface application is configured to determine that the totality of data records exceed the threshold criterion, if the storage size of the totality of data records respectively assigned to all of the two or more category-IDs exceeds a predefined size threshold. According to some embodiments, the interface application is configured to determine that the totality of data records exceed the threshold criterion, if any one of the above-mentioned threshold criteria are met.

According to embodiments, the executable program routines comprise one or more program routines respectively being written in an object-oriented programming language and representing an object method. The processing of each of the retrieved data records comprises identifying the categories assigned to the retrieved data records, and creating data object instances from the retrieved data records. At least some of the created data object instances respectively comprise one or more executable object methods which comprise the executable program routines stored in association with the identified categories. The outputting of the result comprises executing one or more of the object methods of the object instances.

This may have the benefit that the operation of a software application used for performing the processing of the data records may seamlessly be integrated into other program routines of the software application. For example, the processing of the retrieved data records can be performed by the interface application implemented as a monolithic standalone application or can be performed by the interface application implemented as a interface client application or interface server application. The interface application may be written in an object-oriented programming language and may fulfill additional software functions implemented at least partially as object methods of instantiated class objects of the object-oriented programming language such as Java. The additional software functions may relate to generic reporting functions, statistical analysis, data pseudonymization functions, data encryption functions etc. by implementing some of the object methods such that their function is completely or partially provided by means of an executable program routine stored in association with a category, the functionality of the software application used for processing the retrieved data records will inherently depend on the flexibly and reversibly assigned categories of the data records to be processed. This may ensure a seamless integration of heterogeneous data records.

According to embodiments, the executable program routines comprise one or more application programs being installed or stored on a client computer system having submitted the request. In addition, or alternatively, the executable program routines comprise one or more application programs being installed or stored on a computer system running the interface application. The processing of each of the retrieved data records comprises identifying the one or more categories assigned to the retrieved data record, identifying one or more executable program routines stored in association with each of the identified categories of said retrieved data record, and causing the one or more application programs which are comprised in the one or more identified executable program routines to process the data record.

For example, some of the data records may have assigned the category "MSWORDDOCUMENT" while others may have assigned the category "MSEXCELDOCUMENT". The DBMS of the DBMS infrastructure may comprise an assignment of the "MSWORDDOCUMENT" category to a reference. E.g., a pointer, to an executable application program being able to open and process MS Word documents, e.g. MS Word. Likewise, the DBMS may comprise an assignment of the "MSEXCELDOCUMENT" category to a reference. E.g., a pointer, to an executable application program being able to open and process MS Word documents, e.g. MS Word. This reference or pointer may comprise the complete file path to the executable, or may comprise a more generic link with a syntax allowing a given operating system, e.g. MS windows, to identify the complete path to a locally or remotely stored application program (MS Word or Excel or any other application program suited for processing a file having assigned a respective category). This may be beneficial because a data-driven selection of the application program to be used for processing the retrieved data records and/or for outputting the results is provided. The user may not have to invest time and effort to find out which program may be suited for processing the retrieved data. The interface application will ensure that when the retrieved data records are processed, the appropriate application program suitable for processing data records of a given type are started. This feature may be combined with other category-based processing aspects described herein. For example, the retrieved data records may comprise a mixture of word files, excel files, and files of other file types. A GUI generated by the interface application may provide a slightly different view for the data records of the different types, e.g. a tabular view of the excel files and a text area showing the first paragraph of the retrieved MSWord files. Each retrieved data record presented on the GUI may comprise a link e.g. in the form of a "Show more" button, and when the user clicks this button, the link selection will trigger the opening of the data record by MSWord in case the data record has the category MSWORDDOCUMENT and will trigger the opening of the data record by MS Excel in case the data record has the category MSEXCELDOCUMENT.

According to embodiments, the executable program routines comprise one or more program routines selected from a group consisting of:
- executable program routines provided by the DBMS infrastructure;
- executable program routines provided by the interface application; and
- executable program routines provided by a software program external to the DBMS infrastructure and external to the interface application; and
- a mixture of two or more of the aforementioned executable program routines.

The interface application can be implemented as a monolithic standalone application or as a distributed application, e.g., a client-server application or a peer-to-peer application.

In the case of a distributed application, the steps of the method described herein for embodiments of the invention may be distributed. For example, in the case of a client-server architecture, some steps may be performed by the interface server application and other steps may be executed by an interface client application. Typically, the DBMS is maintained and operated by the interface server application, but the interface client applications may have access to the categories stored in the DBMS infrastructure and/or may comprise a local copy of the categories and comprise synchronization means for keeping the local copy in sync with the categories stored in the DBMS infrastructure. So, in case the processing of the retrieved data records is performed completely or partially at a client device, some or all of the category-specific executable program routines used for processing and outputting the retrieved data records may be executed on the client side. If an executable program routine is used in a server-side step of the data processing, the interface application may use a server-side instance of the executable program routine.

According to embodiments, the interface application is implemented according to a peer-to-peer ("P2P") software architecture. For example, a P2P software architecture can comprise a plurality of interface applications ("P2P interface applications") which form a P2P network comprising a data request handler implementing a "Chain of Responsibility" request handling routine. Each of the P2P interface application is configured to perform the method steps described herein for the interface client application, e.g. to create a category-based data request and optionally perform some data record processing and displaying steps using executable program routines assigned to the retrieved data records. In addition, each of the P2P interface application is configured to perform in cooperation with further P2P interface applications together forming the P2P network the method steps described herein for the interface server application, e.g. to store and maintain data records, categories and executable program routines in a local DBMS infrastructure, to retrieve data records matching a data request comprising one or more categories of interest, and optionally to process and/or display the retrieved data records using category-specific executable program routines.

In a P2P architecture, the plurality of "P2P-client applications store the data records and also the categories, category specifications, executable program routines and the assignments of the categories to the data records and the executable program routines redundantly such that even in case some P2P computers are not available, a data request can be processed by the P2P network. However, the redundant storage may also comprise storing sub-sets of categories, data records and/or executable storage routines redundantly in the local DBMS infrastructures of the P2P network.

According to some embodiments, each P2P interface application comprises an access control functionality to protect the locally and redundantly stored data records from unauthorized access. Each P2P interface application is configured to store the data records in encrypted form. Another P2P interface application receives the key for decrypting a data record from a special rights service that cannot be manipulated by the other P2P interface application. This special rights service can be run on a further computer system, e.g. a server computer system, which may optionally be part of a P2P interface application and a respective P2P system architecture. According to alternative embodiments, the decryption key is jointly computed and legitimized by the individual P2P interface applications using distributed cryptographic methods, so that a single P2P interface application cannot gain illegitimate access.

According to embodiments, the DBMS infrastructure, e.g. the DBMS, comprises category specifications of the plurality of categories. Each category specification of a respective category is indicative of one or more of: attribute definitions which specify valid attributes of data records having assigned the respective category; value-checking-rules; allowable attribute value ranges assigned to respective ones of the valid attributes; access-control rules being indicative of the one or more entities allowed to read and/or store data records assigned to this category; routine-execution-control rules being indicative of the one or more entities allowed to trigger the execution of the one or more program routines assigned to this category; relation definitions being indicative of one or more types of relations between data records allowed by the interface application given the categories assigned to the data records.

Depending on the embodiment, the category specifications may be stored in many different data structures. For example, a category specification can be a text file, a node or node label of a database of a graph-based DBMS, or a combination of multiple files or labels or nodes.

This may have the advantage that the categories as implemented according to embodiments of the invention integrate and take over all or most of the most important data processing control and data access control which were previously encoded in the source code of the database access layer or within the control logic of a DBMS. In conventional storage infrastructures, for example, access control may be a function provided by the DBMS and may be implemented in dependence of DBMS users and DBMS user roles. However, on the application layer, there may exist different user roles and different requirements as to who shall be allowed to see or modify individual attributes and as to who shall be allowed to process the data records by means of various functions of the application layer. By implementing some or all of the above-mentioned aspects as accessory features of the categories, the integration of heterogeneous data records is facilitated. Conflicts and inconsistencies which may arise if e.g. the DBMS-based access control scheme does not match exactly with a higher-level, application layer based access control scheme, may be avoided, because both the access control regarding data record attribute as well as access control regarding the use of the executable program routines for processing the retrieved data records is maintained centrally in the category specifications. According to embodiments, the category specification of a category specifies at least the attributes considered as valid attributes of the data records of a given category and specifies the executable program routines used for processing the retrieved data records.

According to embodiments, the interface provided by the interface application for enabling the entity to dynamically modify the stored assignments of the categories to the data records and to modify the stored assignments of the categories to the executable program routines further enables the entity to dynamically perform one or more of the following operations: create new or delete existing assignments of the categories to the data records, create new or delete existing assignments of the categories to the executable program routines, create, modify or delete categories, create, modify or delete data records, create, modify or delete category specifications.

According to embodiments, the interface application is configured to:
- receive user input data or automatically generated input data, the input data comprising a plurality of attributes, attribute values and an indication of at least one of the plurality of categories;
- analyze the category specifications for identifying one or more valid attributes of the at least one indicated category;
- create a new data record, the new data record having assigned the at least one indicated category and selectively comprising the ones of the attributes and respective attribute values which represent one of the identified valid attributes; and
- store the new data record in the DBMS.

This can have the advantage that only relevant attribute values of a newly entered data object (those related to a "valid attribute") are stored in the DBMS and that the user interface does not have to be adapted manually every time something changes in the data model. For example, in an initial version of the DBMS infrastructure, the category "car engine component" may have the following valid attributes in its category specification: Manufacturer, Type, Serial Number and Color. In the course of time, it turns out that the attribute color is irrelevant because the color specifications of the different manufacturers are inconsistent and incomplete and therefore do not matter for further processing anyway. In this case, the attribute "color" can simply be deleted from the category specification of the category "car engine component". This has the effect that even if color information continues to be received via the input interface, it will no longer be stored in the database together with the other attribute values such as manufacturer, type and serial number. The color information is simply ignored. An adjustment of the structure of the DBMS or a manual adjustment of the interface for receiving the input data is not necessary. Nor is it necessary to delete the color information from the existing records in the DBMS, because the existing color information is simply ignored and filtered out by the interface application. When the interface application processes a data retrieval query, the interface application recognizes by analyzing the category specification that the color attribute is no longer a valid attribute for the category "car engine component" and will not return the color information to the entity having submitted the request. This eliminates the need for time-consuming database cleanup steps. Attribute values that already exist do not have to be deleted and are immediately available again if the attribute "color" should be re-introduced as a valid attribute in the category specification at a later time.

According to some embodiments, the interface application is configured to generate a user interface, e.g. a GUI, for entering new data records and storing the new data records in the DBMS infrastructure, whereby the data entry fields of the GUI are created as a function of the valid attributes specified in the attribute specification of a category. For example, the interface application may create a GUI comprising a list of the available categories in the DBMS infrastructure. The GUI may enable a user to select "enter new instance of" for any category in this list, e.g. "car engine part". The selection of this item may trigger the creation of a GUI comprising a data entry field for each attribute currently comprised as a "valid attribute" in the category specification in the selected category. In the given example, the GUI for entering a new "car engine part" would comprise three text fields for the manufacturer, the type, and the serial number, but would not comprise a data entry field for "color".

According to embodiments, the interface application is configured to:
- receive user input data or automatically generated input data, the input data comprising a plurality of attributes, attribute values and an indication of at least one of the plurality of categories;
- analyze the category specifications for identifying one or more valid attributes of the at least one indicated category and for identifying the value-checking-rules and/or predefined attribute value ranges assigned to the identified valid attributes;
- if and only if the received attribute value represents one of the valid attributes of the indicated category and complies with the value-checking-rules assigned to this valid attribute and is within the predefined allowable attribute range assigned to this valid attribute: create a new data record, whereby a received attribute value is used as attribute value of the new data record; and store the new data record in the DBMS;
- if the received attribute value does not comply with the value-checking-rules assigned to this valid attribute and/or is outside of the predefined allowable attribute range assigned to this valid attribute: throw an error and/or not create and store a new data record.

This may be beneficial as the interface application ensures that the attribute values of any newly entered data record comply with some predefined requirements regarding the value ranges. This may prevent errors which may happen during data entry. For example, in case a measurement value is much higher or much lower than it is plausibly possible for the respectively measured parameter, the very high or low value may be the result of a typing error and the interface application may automatically prevent the entering and storing of erroneous data in the DBMS.

According to embodiments, the interface application is configured to:
- receive user input data or automatically generated input data, the input data comprising an indication of at least one type of relation to be created between a first data record having a first one of the categories and at least one second data record having a second one of the categories;
- analyze the category specifications for determining if the at least one type of relation is an allowed type of relation in accordance with the predefined allowed relations specified in the category specifications of the first and the second category; and
- if and only if the at least one type of relation was identified to be an allowable type of relation in the analysis create the relation between the first and the second data record and store the created relation in the database.

This may have the advantage that the interface application ensures that the relations of any newly entered data record comply with some predefined constraints. This may prevent errors which may happen during data entry.

For example, the category specification of the category "car" may specify the allowable relation "comprises trailer coupling". Hence, it is possible for a data record having assigned the category "car" to have a relationship of the type "comprises trailer coupling" which may link this car object to a data record having assigned the category "trailer coupling". However, the relationship "comprises trailer coupling" is an "allowed", i.e., optional relationship. This type of relationship allows but do not necessarily force a connection between data records of the categories "car" and "trailer coupling". It is possible to create a car data record which does not comprise this relation, because when and if the connection is made between a particular car data record and a particular trailer connector data record is yet to be determined. But the relationship "comprises trailer coupling" can only be established between a data record having assigned the "car" category and a data record having assigned the "trailer coupling" category.

In some embodiments, the category specification of a category may also specify compulsory (or "mandatory") relationships which enforce a connection between data records of certain categories. For example, the specification of the car category may comprise the mandatory relation type "comprises engine type". When a user enters a new car data record, he or she must also specify the engine type, e.g. "electric engine", "gasoline engine" or "diesel engine ". Without this information, the interface application may deny the entry of the new data record.

According to embodiments, the interface application is configured to automatically create or modify, in response to the storing of a new predefined type of relation in the DBMS infrastructure, a search interface such that the search interface enables an entity to perform a relation-type based search in the DBMS for data records having assigned a searched relation type.

For example, upon adding a new allowed type of relationship in the category specifications, the interface application may create a search interface supporting a search for data records in the DBMS whereby the search is limited to data records having a relation of the newly created type of relation. For example, if the relation type "comprises trailer coupling" is added to a category and stored in the DBMS infrastructure the first time, the interface application may automatically create an interface, e.g. a REST service interface, enabling clients to request retrieval of all data records having assigned the category "car" and having a defined relation of the type "comprises trailer coupling". For example, the data records for which a relation of the type "comprises trailer coupling" has been defined may respectively have assigned a tag or a label which indicates that the respective relation type is specified. Technically, the tag or flag may be implemented in the same way as a category.

For example, the relationships between data records can be stored as edges in a graph-based DBMS.

According to embodiments, the processing of each of the retrieved data records comprises identifying the categories assigned to the retrieved data records and analyzing the category specifications of the identified categories for identifying the valid attributes of the retrieved data records. The outputting of the result comprises outputting the attributes of the retrieved data records if and only if they are valid attributes of the categories assigned to the retrieved data records.

This may ensure that the user is not overwhelmed with irrelevant data and that the output created for data records of a given category may basically have the same or a similar number of attribute values even in case for historical reasons the data records of a given category may vary greatly regarding the number and type of attributes and respective attribute values.

According to embodiments, the processing of each of the retrieved data records comprises identifying the categories assigned to the retrieved data records and analyzing the category specifications of the identified categories for identifying the access control rules specified in the analyzed category specifications. The processing of each of the retrieved data records with the executable program routines comprises checking if the entity having submitted the request is allowed to read and/or write the retrieved data records in accordance with the access control rules in the category specification of the category assigned to said data record, and granting access to the retrieved data records only in accordance with the access control rules.

This may be advantageous, as a fine-grained, flexible and resource-saving way of providing access control to sensitive data is provided: users or software clients are allowed or denied access on the level of the categories. This means that in case the access right to thousands of data records sharing a given category should be granted to a given user, it is not necessary to update thousands of data records and respective permissions. This reduces CPU consumption, because a single update operation in the category specification of the respective category is sufficient. The category-based access is also highly beneficial in terms of security, because read and/or write access rights are provided on a per-category basis by the interface application. Hence, the interface application provides for an access control layer which controls access to data records independently of the database user access management provided by the DBMS(s) of the DBMS infrastructure.

According to embodiments, the processing of each of the retrieved data records comprises identifying the categories assigned to the retrieved data records and analyzing the category specifications of the identified categories for identifying routine-execution rules specified in the analyzed category specifications. The processing of each of the retrieved data records with the executable program routines comprises checking if the entity having submitted the request is allowed to trigger the execution of the executable program routines stored in association with the category assigned to said data record in accordance with the routine-execution rules in the category specification of the category assigned to said data record, whereby the triggering of any one of said program-routines stored in association with the category is prohibited by the interface application if the entity is determined not to be allowed.

This may have the advantage that a particularly secure and consistent way of operating the DBMS infrastructure is provided: in state-of-the-art systems, the program routines for processing and outputting data records retrieved from the database were predetermined and the question if a user was allowed to execute a software program for performing the data analysis and/or reporting was independent from the access right of the user to the DBMS comprising the data records to be processed. Hence, it could happen that a user was allowed to use a particular analytical or reporting program but did not have the necessary access rights to the data or vice versa. These inconsistencies could prohibit a user from performing an analysis or at least prohibit the user from performing the analysis on the totality of data theoretically available. And even if the user had access both to the analytical/reporting programs and to the database comprising the data to be analyzed/reported, the access control on the database level and application program level was coarse grained, inflexible and insecure, because typically more access rights were granted to the entities than really necessary.

According to preferred embodiments, the analyzing of the category specifications of the identified categories comprises identifying routine-execution rules and access control rules specified in the analyzed category specifications. This may have the benefit that inconsistencies between the rights to access data records and the rights to process and output data records is always performed in a consistent, category-based manner.

According to embodiments, the processing of each of the retrieved data records comprises identifying the categories assigned to the retrieved data records. The outputting of the result comprises displaying attributes of the retrieved data records and displaying a selectable list of GUI elements being representative of the identified categories assigned to the retrieved data records. The interface application, in response to a user' s selection of a sub-set of the identified categories via the list of selectable GUI elements, is configured to filter the retrieved data records to obtain a filtered list of data records which only comprises data records assigned to one of the selected categories; and to display the attributes of the filtered list of data records instead of the attributes of the retrieved data records.

For example, a user may be interested in retrieving a list of car engines that are currently in stock and may submit a query to the interface to retrieve all data records having assigned the category "CAR_ENGINE". The interface application may be configured to generate a GUI showing a list of e.g. 855 identified and retrieved data records having assigned the category "CAR_ENGINE". Some of these data record may be assigned to one or more further categories, e.g. categories such as "ELECTRICAL ENGINE", "GASOLINE ENGINE", "DIESEL ENGINE", "MANUFACTURER A", "MANUFACTURER B", "MANUFACTURER C" etc. The interface application is configured to generate a non-redundant list of further categories assigned to the returned data records and present this list as a list of selectable GUI elements on the GUI. For example, selectable GUI elements can be check-boxes, selectable buttons, etc. By selecting one of these GUI elements, e.g. "GASOLINE ENGINE", a user can filter the 855 "CAR ENGINE" data records to obtain a sub-set of car engine data records which are gasoline engines.

This may have the advantage that a data-driven, highly flexible GUI is provided which can flexibly and fully automatically adapt to any data content with any possible category assignment, thereby enabling a user to efficiently browse the data records. Inconsistencies between the GUI and the data records in the DBMS infrastructure and frequent adaptations of the user interface to modifications in the data model of the data records in the DBMS infrastructure are avoided.

According to embodiments, the data records in the DBMS are associated only indirectly via the category assignments with one or more of the following items:
- executable program routines defining how the data records are processed and/or output;
- a specification of attributes to be treated as valid attribute of the data record;
- a specification of allowable attribute value ranges of attributes of the data record;
- a specification of attribute-value checking routines configured to ensure validity of values to be assigned to attributes of the data record;
- a specification of relationships to other data records to be treated as mandatory relationships;
- a specification of access control rules being indicative of whether an entity is allowed to access a data record stored in association with a category;
- a specification of routine-execution-control rules being indicative of whether an entity is allowed to trigger execution of an executable program routine stored in association with a category.

This may have the advantage that a modification on the category level may have an immediate effect on hundreds or thousands of data records without making it necessary to perform mass operations on the individual data records directly. Changing the above-mentioned items on the category level, e.g., by modifying the category specification of a category, is sufficient. Thereby, time and CPU resources are saved.

In a further aspect, the invention relates to an application program referred to as interface client application. The interface client application comprises:
- an interface for operatively coupling the interface client application via a network to another application program referred to as interface server application, the interface server application having access to a DBMS infrastructure comprising a DBMS and one or more executable program routines. The DBMS comprises stored data records respectively assigned to none, one or more categories, whereby at least some of the database records are assigned to the multiple categories; the DBMS infrastructure comprises assignments of executable program routines to the categories;
- a category data retrieval module configured to receive a local copy of the categories (and optionally also category specifications) from the interface server application;
- a request generation module configured to use the local copy of the categories (and optionally also from a local copy of the category specifications) for creating a request for receiving data records assigned to one or more categories of interest, and for submitting the request to the interface server application; in addition, or alternatively, the interface may also be used for requesting the creation and storing of new data records assigned to one or more existing categories, or for creating new categories;
- a response processing module configured receive one or more of the data records and their respectively assigned categories which match the request from the interface server application;
- an output module configured to output a result of the processing.

In a further aspect, the invention relates to a monolithic or distributed computer system comprising the interface application according to any one of the previous claims and optionally also comprising the DBMS infrastructure.

According to embodiments, the distributed computer system comprises a server computer system and one or more client computer systems. The interface application is implemented as a distributed client-server application comprising an interface server application running on the server computer system and one or more client interface programs respectively running on one of the client computer systems. The storing of the categories, the storing of the assignments, the storing of the data records and the using of the DBMS infrastructure to retrieve one or more of the data records is implemented by the interface server application. The interface client application is configured to provide the interface enabling the entity to dynamically modify the assignments, to provide a search interface for receiving the data request, to receive the retrieved data records via a network from the interface server application and to process the retrieved data records and output the result.

In a further aspect, the invention relates to the interface client application and/or a client computer system comprising the interface client application and comprising a local copy of the categories and at least some of the executable program routines stored in the server-side DBMS infrastructure. The interface client application may comprise a request interface for sending category-based requests to the interface service application and preferably also comprises a synchronization interface for synchronizing a local copy of the categories and at least some of the executable program routines stored in the DBMS infrastructure.

In a further aspect, the invention relates to a peer-to-peer (P2P) interface application and/or a P2P computer system comprising the P2P interface application and comprising the categories, comprises executable program routines stored in a DBMS infrastructure comprised and/or operated by the P2P computer system, and comprising an interface for modifying the categories and/or their assignment to executable program routines or data records stored in the DBMS infrastructure. The P2P interface application may comprise a request interface for sending category-based requests to a plurality of other P2P interface applications together forming a P2P network, and preferably also comprises a synchronization interface for synchronizing at least subsets of the categories and/or executable program routines stored in the local DBMS infrastructure of this P2P interface application with one or more other P2P interface applications of the P2P network.

In a further aspect, the invention relates to the interface server application and/or a server computer system comprising the interface server application and comprising the DBMS infrastructure comprising the categories, the DBMS with the data records and comprising the executable program routines. The interface server application may comprise a request interface for receiving, processing and responding to category-based requests and preferably also comprises a synchronization interface for sending a copy of the categories and copies of at least some of the executable program routines stored in the DBMS infrastructure to the interface client application via a network. The interface server application may be configured to update a time stamp being indicative of the time of the most recent change of a category, category specification or of an assignment of an executable program routine to a category and enable the interface client application to access and evaluate this timestamp. This may allow the interface client application to determine if the local copies of the categories and executable program routines may be out of sync and need an update.

According to some embodiments, the server computer system comprises the DBMS infrastructure and comprises a server-side part of the interface application according to any one of the embodiments described herein. The server-side part is referred to as interface server application.

Each client computer system comprises a local copy of the categories originally stored in the DBMS infrastructure and comprising a local copy of one or more of the executable program routines originally stored in the DBMS infrastructure. Each client computer system comprises a client-side part of the interface application according to any one of the embodiments described herein. The client-side part is referred to as interface client application.

The interface client applications and the interface server application comprise a synchronization interface configured to automatically synchronize the local copies of the categories and of the executable program routines. The synchronization is performed only for the ones of the executable program routines in the DBMS infrastructure which have assigned metadata indicating that the executable program routines is to be executed on the client computer system. At least one of the executable program routines used for the processing of the retrieved data records is executed by the client computer system and is a local, client-side copy of an executable program routine originally stored in the DBMS infrastructure.

This may be advantageous, because the flexibly adaptable categories and their respectively assigned executable program routines in combination with the metadata of the executable program routines (which can preferably be changed and edited easily via a GUI or command line interface without the need for a source code modification or re-compilation of an executable program) automatically determine the functionality of the client computer system. So in case the client application is allowed to process data records of a given category, and in case a new executable program instruction is created and stored in the DBMS infrastructure for this category, the functionality of the interface client application is automatically extended by downloading the local copy of the routine in case the new/updated executable program routine is intended for client-side execution according to the metadata. For example, the metadata can be a text file, e.g. an XML file, or an entry in a database linked to an executable program routine.

According to embodiments, one or more first ones of the executable program routines in the DBMS infrastructure have assigned metadata indicating that the first executable program routines are to be executed on the server computer system, whereby the one or more first executable program routines are selected from a group comprising:
a) data compression routines, e.g. zip, gzip, routines for lowering the resolution of videos or images, etc.;
b) data encoding routines, e.g. some video codecs;
c) data formatting routines;
d) a mixture of two or more of a), b) and c) first executable program routines.

One or more second ones of the executable program routines in the DBMS infrastructure have assigned metadata indicating that the second executable program routines are to be executed on the client computer system, whereby the one or more second executable program routines are selected from a group comprising:
a) data de-compression routines;
b) data decoding routines;
c) data interpreting routines;
d) a mixture of two or more of a), b) and c) second executable program routines.

The first executable routines and the second executable program routines of the same type a), b) or c) preferably are complementary to each other.

According to one example, the retrieved data records have assigned a "COMPRESSABLE" category indicating that the data record should be compressed for being transferred via a network. The processing of the retrieved data records comprises performing one of the first executable program routines of type a) by the server computer for compressing the data records. The processing of the retrieved data records comprises performing one of the second executable program routines of type a) by the client computer for de-compressing the compressed data records provided by the server computer system (or provided by a P2P interface application network). The category may also be more concrete and refer to a particular compression algorithm.

According to another example, the retrieved data records have assigned a "FORMAT X" category indicating that the data record should be transformed into a particular format, e.g. a proprietary or non-proprietary format, before they are transferred via a network. The processing of the retrieved data records comprises performing one of the first executable program routines of type b) by the server computer for transforming the retrieved data records into the desired format. The processing of the retrieved data records further comprises performing one of the second executable program routines of type b) by the client computer for parsing and interpreting the received, formatted data records provided by the server computer system (or provided by a P2P interface application network).

According to some embodiments, the interface server application and the interface client applications are configured to execute the first and second executable program routines of the types a), b) and/or c) on the retrieved data records only in case one of the following conditions are fulfilled:
- the request of the client indicates that the client computer system is located in a specific geographic region, e.g. one with a network bandwidth below a threshold or one with specific legal restrictions, e.g. restrictions for video codecs or for data formats;
- a currently measured network bandwidth between the computer system providing the retrieved data records (e.g. server computer system) and the client computer system receiving the retrieved data records is below the network bandwidth threshold.

For example, the interface server application can be configured to determine the geographic location of the client computer system based on the IP address of the computer system having submitted the data request, or based on an explicit specification of the location comprised in the data request, e.g. a GPS position, a country-ID, a zip-code, etc. Alternatively, the interface server application may monitor the bandwidth of the network connection to the respective client computer to decide dynamically whether the bandwidth is so small that the data records should be compressed in some enhanced way, e.g. by lowering the resolution of a video, before being transmitted via the network.

In a further aspect, the invention relates to a system comprising the interface application and the DBMS infrastructure. According to embodiments, the DBMS is a graph-based DBMS, the data records are nodes of a graph managed by the graph-based DBMS. The categories are further nodes of the graph. According to some embodiments, the category nodes are assigned to the data record nodes via labels of the data record nodes (and not via edges, i.e., data structures defining links between nodes of a graph-based database). Each of said labels is indicative of one of the categories. The labels of the data record nodes being indicative of the category membership can be indexed. This may support a very fast search for data records having assigned a particular category. According to embodiments, the category specifications are implemented as labels of the category nodes and comprise links to executable program routines stored in the file store. This may further increase performance, because the executable program routines are not part of the category nodes and are loaded or transferred to interface client applications/P2P clients only in case they are really needed. Moreover, by storing the category specifications as labels of the category nodes rather than as labels of the data records, the creation of redundant labels and the creation of very large search indices can be avoided.

In a further aspect, the invention relates to a method for operating a DBMS infrastructure. The method is implemented by an interface application operatively coupled to the DBMS infrastructure, the DBMS infrastructure comprising a DBMS and comprising one or more executable program routines. The method comprises:
- storing a plurality of categories in the DBMS infrastructure, e.g. in the DBMS;
- storing assignments of one or more of the categories to one or more executable program routines in the DBMS infrastructure;
- storing data records in the DBMS such that each of the data records is assigned to none, one or multiple ones of the plurality of categories, whereby at least some of the database records are assigned to multiple categories;
- providing an interface enabling an entity to dynamically modify:
   - the stored assignments of the categories to the data records; and
   - the stored assignments of the categories to the executable program routines;
- in response to receiving a data request, using the DBMS infrastructure to retrieve one or more of the data records and their respectively assigned categories which match the request;
- processing each of the retrieved data records with the executable program routines stored in association with the zero, one or multiple categories associated to each of the retrieved data records; and
- outputting a result of the processing.

A **"DBMS infrastructure"** as used herein is an IT infrastructure for storing data which comprises one or more DBMSs. The DBMS infrastructure can be run on one or more computer systems. For example, a DBMS infrastructure can be run on a single computer system or on multiple computer systems intraoperatively coupled to each other, e.g., a cloud computer system or a P2P-computer system. The DBMS infrastructure further comprises one or more executable program routines. The program routines can be stored, for example, in one of the one or more DBMS, or in a file directory, or in a file storage, or in a combination of two or more of a DBMS, a directory, a file storage, etc.

A **"database management system"** or **"DBMS"** as used herein is a software- and/or hardware-based system for storing, managing and processing electronic data. According to embodiments of the invention, the DBMS is a software system that enables users to define, create, maintain and control access to the database". Examples of DBMS's include MySQL, PostgreSQL, Microsoft SQL Server, Oracle Database, Neo4J, and Microsoft Access. DBMSs can be based on different database models such as relational, object oriented, or graph-based. DBMSs are designed to store large amounts of data in an efficient, consistent and durable manner.

A **"pointer"** as used herein is any information which allows an entity such as a user, a software program or an operating system to trigger the execution of an executable program routine. For example, the pointer can be a link encoding the absolute path or a relative path to the storage location of the executable program routine. The pointer can also be a reference to a particular file stored in an index of a database, any other form of data allowing to selectively trigger the execution of the executable program routine.

As used herein, a **"data record"** refers to a group of data values related in content (belonging to an object), e.g., article number and article name and date of manufacture. Depending on the embodiment, the data records may have different attributes and data types. For example, a data record can comprise one or more numerical values, one or more alphanumerical values, one or more files such es image files, comma-separated files, XML-files, office files or various other files. A data record may be stored in its totality in a database of the DBMS infrastructure. In other examples, only some attributes and respective attribute values are stored in the database, whereby the data record in addition comprises links pointing to one or more files stored in a file repository. Storing only some attributes and their respective values in the database managed by the DBMS while storing files representing attribute values of further attributes separately in a file repository may have the advantage that the size of the database maintained by the DBMS can be kept small. According to one embodiment, the DBMS of the DBMS infrastructure comprises the categories, the category specifications and the data records. According to some embodiments, the DBMS is a graph-based database such as neo4j.

A "file storage" as used herein is a data store adapted to store files, in particular executable files. For example, the file storage can be a directory, a DBMS, a file management system or a part of a decentralized networked online storage, e.g. a cooperative storage cloud where data is stored on multiple computers (nodes), hosted by the participants cooperating in a P2P network.

A "category" as used herein is a class of objects which share one or more features. Hence, a "category" refers to a class, or type of objects (data records), whereby each category is defined based on one or more shared traits, features, similarities or other criteria. A category can be implemented, for example, as a flag or label stored in association with one or more data records.

A "category specification" as used herein is data being descriptive of the category and category-associated data such as valid attributes, allowed relation types, mandatory relation types, allowed attribute value ranges, access control rules, executable program control rules, constraints for creating attributes or relationships etc. A category specification may comprise one or more links to executable program routines to be used for processing and/or displaying the data records having assigned the respective category. According to some embodiments, the category specification is stored in association with the respective category. According to some embodiments, the category specification can be implemented and stored as a tag or a label of a category. According to some embodiments, a category specification can be more complex and comprise a combination of files or other data structures.

A "label" as used herein is a data structure which is assigned to another data structure and allows storing additional information, e.g. metainformation, in association with the other data structure. For example, a "label" can be a "label" data structure provided by the Neo4J database i.e., a small data structure allowing to assign some simple data types, e.g. some Strings, to a node of the database. A label can also comprise complex information such as attributes, permissions, functions, data files etc.

An **"executable program routine"** as used herein is an instruction which can be interpreted by a computer and causes, when executed, the computer to perform an indicated task according to the instruction. For example, an executable program routine can be executable code, an executable file, or an executable program. It can be a script, a rule to be interpreted by a rules engine, or a binary. It can be implemented in any programming language such as C++, Java, Javascript, Perl, Python, Ruby etc.

A **"data request"** as used herein is a request for retrieving one or more data records.. It can be a read or write request. The data request is specified in the syntax of the request interface of the DBMS. For example, the data request can be an SQL request. Likewise, the request can have any other syntax which can be interpreted and parsed by the interface application. In some embodiments, the data request received by the interface application receives the data request in the form of a non-SQL-based request, e.g. a service request, e.g. a REST service request, and is configured to generate a data request in the syntax required by the DBMS comprising the data records, e.g. SQL. In case the database is a read request, the interface application will return a result set of zero, one or more returned data records. In case the database is a write request, the interface application will, for example, return a notification whether or not the data records were successfully updated as requested or not.

An **"interface application"** as used herein is a software program. In particular, an interface application can be a software program configured to serve as an access layer for the DBMS infrastructure. It can be implemented as a monolithic standalone application or as a distributed application, e.g. a client-server application or a peer-to-peer application ("P2P interface application"). For example, a P2P interface application can be implemented such that it is configured to execute steps described herein as being executed by the interface client application of a client server architecture but communicates with other peer-to-peer interface applications rather than with a server application. The P2P interface application can be implemented such that it is configured to form a P2P network with other P2P interface applications, such that the P2P network execute steps described herein as being executed by the interface server application of a client server architecture. The interface application or the client-part of the interface application ("interface client application") or the P2P interface application can be implemented as a browser-plugin. According to some embodiments, the DBMS infrastructure comprises at least one DBMS comprising the data records, the categories and the category specification. For example, the at least one DBMS can be a graph-based DBMS or a relational DBMS. The interface application can for example be configured to serve as access layer for the at least one DBMS of the DBMS infrastructure comprising the data records.

### BRIEF DESCRIPTION OF THE DRAWINGS

In the following, only exemplary forms of the invention are explained in more detail, whereby reference is made to the drawings in which they are contained. They show:
- Figure 1: a block diagram of a computer system comprising an interface application and a DBMS infrastructure;
- Figure 2: a flowchart of a method for operating a DBMS infrastructure;
- Figure 3: a block diagram of a distributed computer system comprising a DBMS infrastructure and an interface application implemented as server-client infrastructure;
- Figure 4: a block diagram of another distributed computer system comprising a DBMS infrastructure and an interface application implemented as server-client infrastructure;
- Figure 5: an illustration of the storing of the categories and data records in a graph-based DBMS;
- Figure 6: a GUI for displaying data records having assigned the category "PROCUREMENT";
- Figure 7: a GUI for displaying data records having assigned the category "PRODUCTION SERIES A"; and
- Figure 8: a distributed interface application used for controlling the execution of server-side and client-side executable program routines;

### DETAILED DESCRIPTION

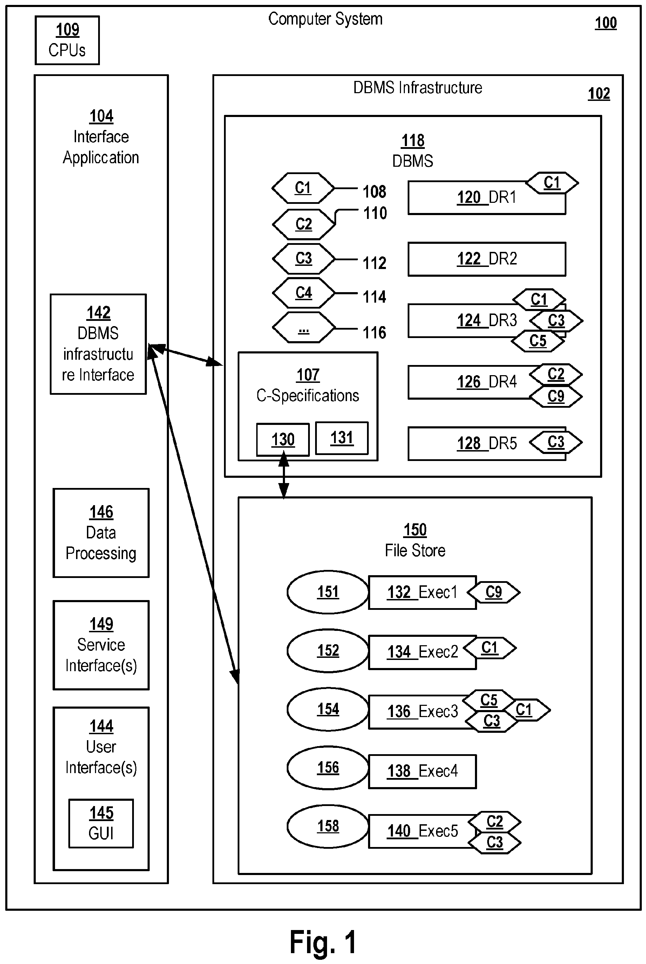

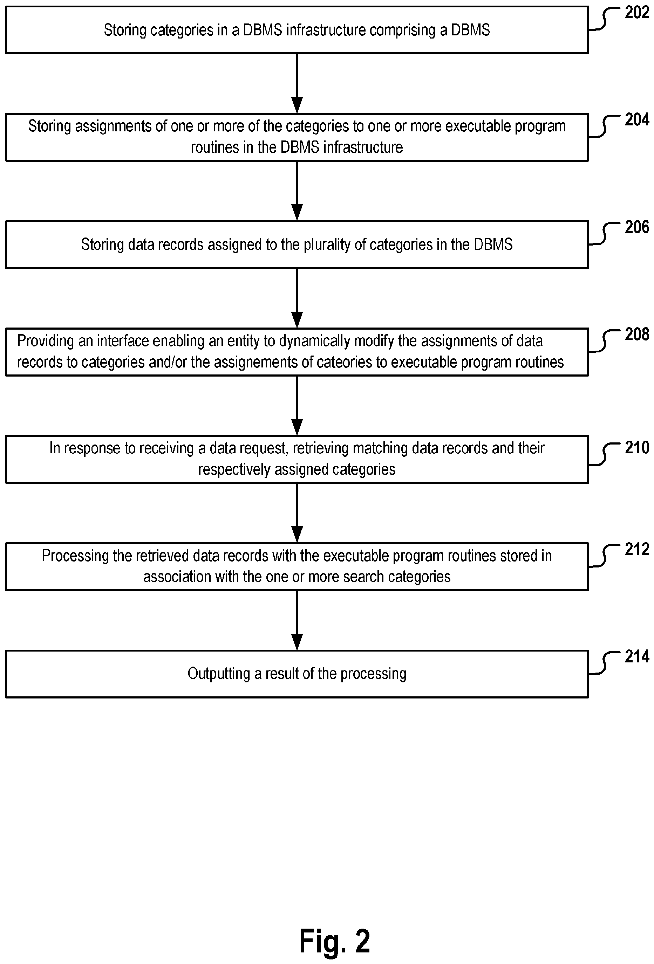

**Figure 1** shows a block diagram of a computer system 100 comprising an interface application 104 and a DBMS infrastructure 102. For example, the system may be used for performing a method for operating a DBMS infrastructure as illustrated in the steps 202-214 of the flowchart depicted in figure 2.

The computer system can be a monolithic computer system, e.g. a single server computer system, or a distributed computer system, e.g. a cloud computer system, a client-server computer system, a peer-to-peer computer system, etc. For the sake of simplicity, the system of figure 1 will be described based with focus on the software architecture, not on the hardware architecture which might be employed.

The computer system 100 comprises an interface application 104 and a DBMS infrastructure 102. The DBMS infrastructure comprises one or more DBMSs 118 for storing a plurality of data records 120-128 and comprises a plurality of executable program routines 132-140, whereby at least some of these executable program routines are used for processing and/or outputting the data records in a category-specific manner. In the depicted example, the executable program routines are stored in a file store 150 which is part of the DBMS infrastructure and which in addition may comprise files which are part of some of the data records, e.g. files comprising some attribute values, images, binary data of any type etc. which may also be retrieved and processed when a respective data record is retrieved and processed. The DBMS infrastructure further comprises a plurality of categories 108-116 which may also be stored in the DBMS 118 or in another data structure of the DBMS infrastructure. The categories are stored in association with the data records such that each of at least some of the data records is assigned to one or more of the categories. For example, the executable program routine 132 is stored in association only with category c9 while the executable program routine 136 is stored in association with three different categories C1, C3 and C5. So in some implementation variants it is possible to re-use some routines for processing data records of more than one category. In other implementation, each executable program routine is assigned to only one category. The DBMS infrastructure, e.g. the DBMS 118, further comprises category specifications 107. Each category specification represents one of the categories and may comprise one or more pointers respectively pointing to one of the executable program routines 132-140, thereby creating a category-specific association between categories and executable program routines for processing data records of said category. Each category specification may comprise further category-related data 131 such as valid attributes, valid attribute value ranges, allowed and/or mandatory relation types, mandatory attributes, constraints for the creation of relations to data objects of other categories, etc.

The interface application 104 is interoperable with the DBMS infrastructure. For example, the interface application can comprise a DBMS infrastructure interface 142 enabling the interface application to access the data records and category information in the DBMS 118 and to access and execute the executable program routines 132-140 in the file store 150.

The interface application comprises an interface 144 enabling a user or a client program to create, modify or delete categories, associations between categories and data records, associations between categories and executable program routines and/or category specifications at any time during the runtime of the DBMS. For example, the interface 144 may comprise a GUI 145 enabling a user to perform the above-mentioned modifications.

The interface application may further be configured to receive a request for retrieving data records which are assigned to one or more categories of interest and to process and output the retrieved data records using the category-specific program routines as a function of the categories assigned to the retrieved data records. For example, the interface application may comprise a data processing module 146 configured to select and execute executable program routines 132-140 in dependence of the categories of the data records retrieved by the interface application.

Each executable program routine may have assigned metadata 151-158 being indicative of where, when and/or how the respective executable program routine shall be executed and/or if a copy of the executable program logic should be transferred from the server-side to the client-side of the interface application having a client-server architecture.

According to some embodiments, the interface application 104 is configured to automatically create (or update) a new service interface 149 upon the creation (or modification) and storing of a category in the DBMS infrastructure, whereby a service interface allows a client, e.g. a client application, to request and retrieve data records having assigned the category whose creation/modification triggered the creation/update of the service interface.

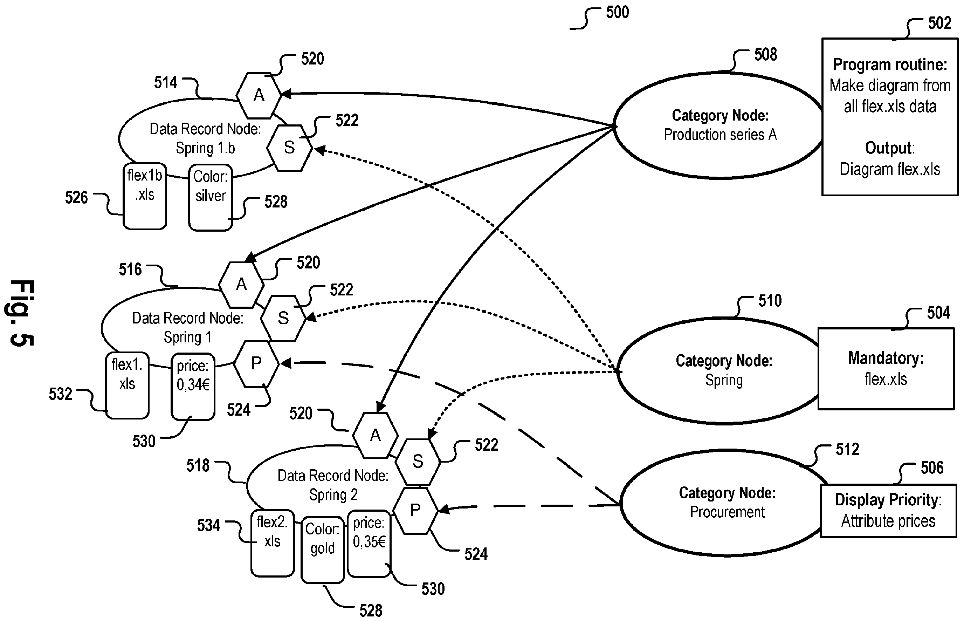

According to one example, the interface application is configured to store in step 202 a plurality of categories 108-116, 508, 510, 512 in the DBMS infrastructure, e.g. in the DBMS 118. For example, this can be performed by storing category nodes in a graph-based DBMS as depicted in figure 5. Next in step 204, the interface application stores assignments 130 of one or more of the categories to the one or more executable program routines in the file store of the DBMS infrastructure. For example, this can be performed by creating labels assigned to category nodes as depicted in figure 5. Next in step 206, the interface application stores data records 120-128, 514, 516, 518 in the DBMS 118 such that each of the data records is assigned to none, one or multiple ones of the plurality of categories. For example, the assignment of data records and categories can be stored in the form of labels of data record nodes of the graph-based DBMS. At least some of the database records are assigned to multiple categories. Next in step 208, the interface application provides an interface 144 to an entity, e.g. a user, which enables the entity to dynamically modify one or more of: the stored assignments of the categories to the data records; the stored assignments of the categories to the executable program routines; the categories; and category-specifications. Upon assigning a new category to a data record, a user may also specify the attributes and relations of this new category.

For example, the associations between the categories and the executable program routines can be stored in the form of an edge of the graph-database of a graph-based DBMS as depicted e.g. in Figure 5, whereby an "edge" of a DBMS graph is also referred to as a "relation" of a graph-based DBMS. These edges used for storing associations between categories and executable program routines may have a particular type, e.g. the type "Executable", whereby the "Executable" edges of a graph database start from a category node and point to other nodes ("file nodes") in the graph database. Each "file node" comprises a pointer to one of the executable program routines. The file node may comprise metadata of the executable program routine, e.g. an ID of the executable program routine, an indication of the computer system which is to receive a copy of the executable program routine for local execution, a checksum of the executable program routine. According to one implementation, the category "EXECUTABLE" is assigned to each file node, thereby also assigning the attribute "Execution Location" to the file node. Alternatively, these metadata may be stored in association with edges of the type "EXECUTABLE".

Next in step 210, the interface application uses, in response to receiving a data request, the DBMS infrastructure to retrieve one or more of the data records and their respectively assigned categories which match the request. For example, the interface application could receive a request from a client to retrieve all data records having the category "PRODUCTION SERIES A", could perform a category-based search in the data records in the DBMS 118 for retrieving all data records having assigned the category "PRODUCTION SERIES A" which in addition comply to further search criteria specified in the request, if any.

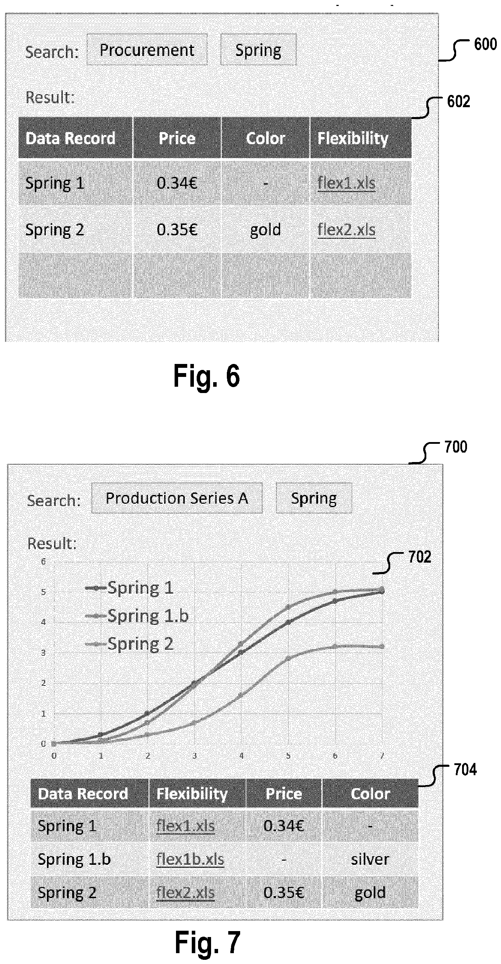

Next in step 212, the interface application processes each of the retrieved data records with the executable program routines stored in association with the categories associated to each of the retrieved data records. For example, the data processing module 146 may analyze the category specifications for identify the executable program routine(s) 132-140 stored in association with the searched category "PRODUCTION SERIES A ". The identified program routines are selectively executed for processing and outputting the retrieved data records in a category-specific manner. An example of a category-specific processing and outputting of data records is described in greater detail e.g. in figures 6 and 7.

Next in step, the result of the processing is output. For example, the output can be stored automatically to a file store and/or can be displayed to a user via a display device.

**Figure 2** shows a flowchart of a method for operating a DBMS infrastructure which has been described already with reference to figure 1.

For example, according to one embodiment, the steps 202-214 are all executed by a monolithic interface application and the data request mentioned in step 210 may be received from a client computer system comprising another instance of an interface application or comprising any other type of client software configured to submit a category-based data request to the interface application.

According to another example, the interface application is a distributed application having a client-server software architecture comprising one or more clients (interface client applications) and at least one server (interface server application). In this embodiment, the data request mentioned in step 210 is sent from the interface client application to the interface server application and the steps 202-210 are executed by the interface server application. Depending on the category/categories retrieved and on the implementation variant, the step 212 may be executed exclusively by the interface server application, or exclusively by the interface client application, or may be executed partly by the interface server application and partly by the interface client application. The outputting step 214 may be executed completely or partially by the interface server application, e.g. when the interface server application generates a chart in the form of a jpg and displays the jpg image via a display of the server computer system and/or stores the output in the DBMS infrastructure. In addition, or alternatively, the outputting step 214 may be executed completely or partially by the interface client application, e.g. when the interface client application generates a chart in the form of a jpg based on the retrieved data records received from the interface server and displays the jpg image in a browser or in a GUI of the interface client application via a display device of a client device.

According to another example, the interface application is a distributed application having a P2P software architecture comprising a plurality of interface applications ("P2P interface applications", "P2P interface client applications") and optionally a server for key management and access control. The plurality of P2P interface applications are executed on a plurality of computer systems also referred to P2P computer systems or P2P nodes. The plurality of P2P interface applications form a P2P network comprising a request handling routine configured to pass data requests along a chain of P2P computer systems acting as P2P handlers. In particular, the P2P network can comprise a request handling routine configured pass data requests according to a "Chain of Responsibility" pattern, according to which each handler decides either to process the request or to pass it to the next handler in the chain. For example, the P2P applications may interoperate with and use of existing generic P2P software implementing request handling routines and/or implementing routines for redundantly storing data in a distributed P2P data store. In this embodiment, the steps 202, 204 and 206 can be implemented such that the data records, categories and executable program routines are stored redundantly in local DBMS infrastructures comprised or operated by respective ones of the P2P computer systems. In some embodiments, each P2P computer system may comprise a complete copy of the DBMS infrastructure. In other embodiments, none of the P2P computer systems may comprise the totality of categories, data records and/or executable program routines available in the P2P network. Rather, the local DBMS infrastructure of each P2P computer system may store only a subset of the totality of available categories, data records and executable program logics, whereby the sub-sets preferably have overlaps to ensure that data requests can be processed also in case some of the P2P computer systems are not available. The data request mentioned in step 210 is sent from a first P2P interface client application to the P2P network and the request handling routine of the P2P network is configured to identify one or more second ones of the other P2P computer systems and respective second ones of the P2P interface applications of the P2P network which are to be used for processing the data request and which are to be used for executing the steps 210-214. For example, the ones of the P2P computer systems whose local DBMS infrastructure comprise the requested categories or executable program routines and/or the ones of the P2P computer system which currently do not have a high operational load may be selected for retrieving and processing the data records.

According to some embodiments, the steps 212 and 214 executed by the first interface application and the subset of second P2P interface application selected by the request handling routine is executed as described for the client-server architecture example, whereby the first P2P interface application is configured to execute the steps performed by the interface client application and the selected subset of second P2P interface applications is configured to execute the steps performed by the interface server application. According to embodiments, each P2P interface application is run on a respective P2P computer system, whereby each P2P computer system comprises or operates a respective DBMS infrastructure which is, according to some embodiments, synchronized at least partially with the DBMS infrastructures of the other P2P computers via synchronization interfaces of the P2P interface applications. Each P2P interface application may comprise an interface enabling an entity to dynamically modify categories, category assignments to data records and/or executable storage routines, executable storage routines stored in the DBMS infrastructure comprised or operated by the respective P2P computer system.

Features of the categories, category specifications, DBMS infrastructure, their dynamic modification and synchronization etc. which are described herein with reference to a monolithic interface application can likewise be implemented by a distributed interface application such as a client-server architecture or a P2P architecture or vice versa.

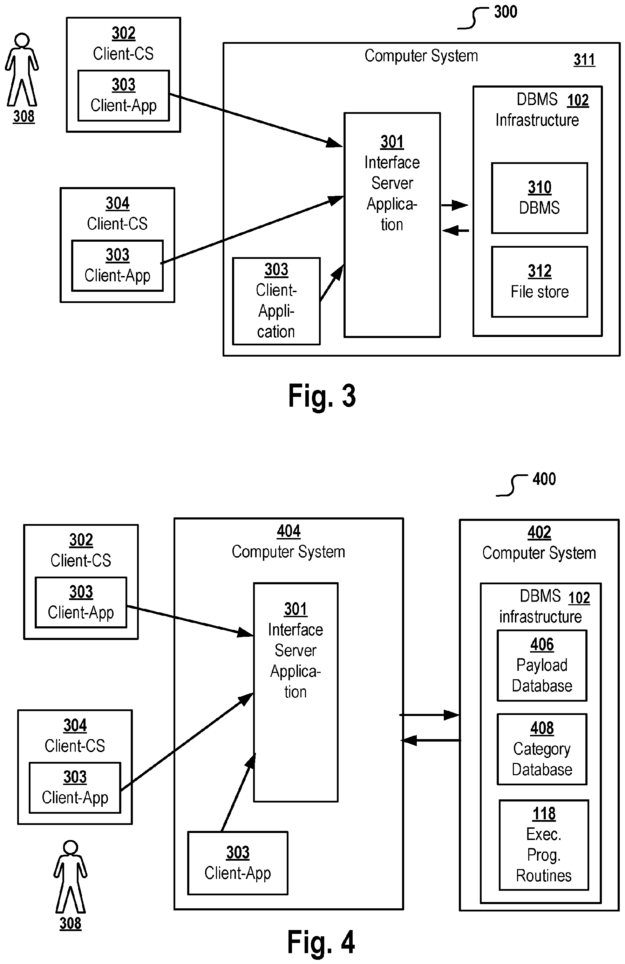

**Figure** 3 a block diagram of a distributed computer system 300 comprising a DBMS infrastructure and an interface application implemented as a client-server infrastructure. A server computer system 311 comprises the server-side part 301 of the interface application. The server-side part is also referred to as "interface server application". The interface server application 301 is interoperable with and operatively coupled to one or more interface client applications 303 hosted on different client computers 302, 304. The client computers are connected to the server computer 311 via a network, e.g. the Internet. A client computer can be, for example, a portable telecommunication device, a desktop computer, a tablet computer, or a distributed computer system such as a cloud computer system. The interface client application 303 represents the client-side part of the interface application in a client-server system architecture. While the interface server application 301 has access to the DBMS infrastructure 102, the interface client application(s) cannot access the DBMS infrastructure directly for retrieving data records. Rather, they have to submit data requests to the interface server application 301. The DBMS infrastructure 102 in the example depicted in figure 3 comprises a DBMS 310 for storing the data records, the categories and the assignments and a file store 31 for storing at least some of the executable program routines assigned to respective categories.

According to some examples, each client application is configured to receive and maintain a local copy of the categories and category specification. This may assist a client application in generating data request for retrieving data records of a particular category. In some examples, the interface client application can comprise an interface enabling a user 308 or a software client to specify a data request, to enter new categories, category-specifications and category-assignments, to modify existing categories, category-specifications and category assignments. The checking whether a newly entered data record or relation complies with existing category specifications (e.g. valid attributes, attribute value ranges, mandatory or allowed relation types, access permissions) may be executed according to some examples by the interface client application based on the local copy of the categories and category specifications. This may reduce network traffic because erroneous data is not transferred via the network. In some example implementations, at least some of the executable program routines for processing and displaying the retrieved data records may be stored locally on a client system. For example, an interface client application may be an application, e.g. a JavaScript-based application, executed within a web browser, whereby the client-side, category-specific executable program routines may be Java-code snipplets executed in dependence of the categories of the data records returned from the interface server application to the interface client application.

The databases 406, 408 may be, for example, relational databases. The executable program routines 118 may be stored in a file store 312 comprised in the DBMS infrastructure.

Figure 3 also depicts a locally installed interface client application 303, so in some cases, the interface client application may be run on the same computer system as the interface server application.

**Figure 4** shows a block diagram of another distributed computer system 400 comprising a DBMS infrastructure and an interface application implemented as server-client infrastructure. The structure and function of the interface client applications and the interface server application 301 is basically the same as described with reference to Figure 3. In the example depicted in figure 4, the interface server application 301 is run on a different computer system 404 than the computer system 402 used for running the DBMS infrastructure 102. In addition, the data records are stored in a database 406 referred to as payload database and the categories and category specifications are stored in a database referred to as category database. The databases 406, 408 may be, for example, relational databases. The executable program routines 118 may be stored in a file store 312 comprised in the DBMS infrastructure.

**Figure 5** shows an illustration of the storing of the categories and data records in a DBMS infrastructure 500 comprising a graph-based DBMS and a connected file storage. For example, the graph-based DBMS can be Neo4J. In the graph database, the data records 514, 516, 518 are implemented as nodes. Each node can optionally include one or more file IDs pointing to possible connected files in the file storage. For example, data record 514 comprises a file-ID pointing to the flexlb.xls file 526 in the file storage. Likewise, data record 516 can comprise a file-ID pointing to the flex1.xls file 532 and data record 518 can comprise a file ID pointing to a flex2.xls file. These files may comprise further data of the data record which may be retrieved only when needed. Each data record comprises one or more attributes and respective values, e.g. the attribute-value pairs 528 of data records 514 an 518 indicating that the object represented by the data record 514 (or 518) has silver (or gold) color, or the price-attribute value pairs 530 of the data records 516, 518.

Each data record can be associated with one or more categories.

According to some examples, the categories 508, 510, 512 are assigned to respective data record nodes 514, 516, 518 via edges of the graph-based DBMS.

However, according to preferred examples, the category nodes are not assigned to the data record nodes via edges, but rather via a corresponding label 520, 522, 524. These labels are then indexed. For example, the indexing may be performed by the interface application or may be performed by the graph DBMS automatically. This may increase performance, because the indexing of the labels (and hence of the categories) of the data record nodes is a property that allows for highly performant, scalable search. The nodes of the categories on the other hand allow for assignment of executable program routines, which can be stored in the file storage.

According to preferred examples, the interface application is configured to retrieve and process the data records in response to a query as follows:
An interface application may be configured to automatically generate a data request for retrieving data records having assigned one or more categories of interest, e.g. categories A and B. Alternatively, a user could use an interface client application to manually specify a data request for the one or more categories of interest via the interface application. The interface application to generate the data request may be, for example, an interface client application or a P2P interface application or any other client application. The interface application receiving the request can be a monolithic interface application, an interface server application or a P2P network of P2P interface applications. The interface application receiving the data request generates database queries as a function of the categories of interest specified in the received data request. For example, the database queries can be specified in the query syntax of the DBMS comprising the data records, e.g. Neo4j database queries.

Before the interface application generates the database request, the interface application checks if the client having submitted the data query is permitted to read data records of the categories A and B. For example, the checking can comprise analyzing access permissions stored in the category specifications of categories A and B. Only in case the client has the necessary permissions, the interface application having received the data request will continue to generate the database queries, retrieve matching data records and return the data records to the clients, whereby the retrieved data records are processed by the interface client application or P2P interface application having submitted the data request and/or are processed by the interface server application or the other P2P interface application P2P network having received the data request using the executable program routines assigned to categories A or B.

In case the client has the necessary permissions, the interface application having received the data request searches the DBMS of the DBMS infrastructure for identifying one or more data records matching the request; typically, one or more indices, e.g. attribute-value base indices, can be used for identifying the matching data records. Starting from the data record node corresponding to each of the identified data records matching the request, the interface application determines the category-related labels of this node. There may be zero to multiple labels per node. Typically, there will be one to multiple labels per node. The interface application searches a label-based index for identifying the category nodes identified by the category label. The interface application analyzes the category node for determining how the data records having assigned the respective category label should be processed.

If the requesting entity has the necessary permissions, the interface application is configured to trigger execution of the executable program routines stored in association with the respective category node. For example, the category specification of the category node may comprise a link pointing to the respective executable program routine. The link may be a full path to the program routine or may be a partial path or shortcut which enables the operating system of the computer executing the interface application (or the interface client application) to identify a locally installed executable program routine, e.g. a locally installed application program such as MS Wort or Excel. The one or more executable program routine may also comprise routines which determine how the data records will be processed and displayed. For example, the executable program routines can comprise JavaScript code sections or JavaScript-based scripts or library which are to be used for generating a GUI to present the content of the retrieved data records.

Newly specified categories and executable program routines can be defined and stored independently of previous categories or old executable program routines. The new executable program routines can be freely assigned via the interface application to all existing data records while working with the DBMS without overhead.

The categories 508, 510, 512 are also stored as nodes in the graph-DBMS. According to the depicted embodiment, the category nodes and the data record nodes belong to different, unconnected graphs. This means that the connections between the category nodes and the data record nodes are not implemented as edges of a common graph, but preferably are implemented as data record node labels being indicative of the category.

For example, the "A" label 520 of the nodes 514, 516, 518 indicates that all three nodes/data records are assigned to the category "PRODUCTION SERIES A" 508. The "S" label 522 of the nodes 514, 516, 518 indicates that all three nodes/data records are assigned to the category "SPRING" 510. The "P" label 524 of the nodes 516, 518 indicates that said two nodes/data records are assigned to the category "PROCUREMENT" 512.

According to some examples, the graph of the graph DBMS comprises category specifications 502, 504, 506 which may be stored, for example, as labels of the respective category nodes 508, 510, 512. Each category specification may specify various category-associated items. A category specification may comprise a specification of valid attributes to be entered and/or of a link to an executable program routine used for outputting the data records of this category retrieved from the graph DBMS in response to a data request.

For example, the label 502 specifies that any data record having the category "PRODUCTION SERIES A" should be processed and output such that a diagram having the file name "flex.xls" is generated and displayed, whereby the data in the flex.xls file associated with the respective data record should be used as input for creating the diagram. The flex.xls file comprises some mechanical parameters regarding the flexibility of an object. The label/category specification 504 specifies that any data record to be newly created for the category "spring" must comprise a "flex.xls" file. The interface application will check, upon creating a new data record, all requirements and constraints specified in the category specification of each category to be assigned to the new data record and will create the new data record only in case it meets all requirements of the respectively assigned categories. Likewise, if a category is dynamically assigned to an already existing data record, the interface application will check if the existing data record comprises a "flex.xls" file. The label/category specification 506 specifies that any data record having assigned the category "PROCUREMENT" should be displayed such that the attribute "price" is displayed first.

**Figure 6** depicts a GUI 600 for displaying data records having assigned the category "PROCUREMENT". For example, the interface application may receive a request from a user or a client application for data records representing objects to be bought. These data objects have assigned the category "PROCUREMENT". The interface application searches the DBMS for data records of the "PROCUREMENT" category and will retrieve two data records which represent springs. In the depicted example, each of the two retrieved data records has assigned the "PROCUREMENT" category and the "SPRING" category. In accordance with the category specification 506 of the category node 512 for the "PROCUREMENT" category, the attribute "price" is the first attribute to be displayed as this attribute is the most relevant in the context of acquiring/buying an item. The GUI 600 shows the attribute values of the returned data records in tabular form, whereby the table includes a link to an xls file assigned to the respective data record which comprises information regarding the flexibility of the springs. Data Records of the category "Spring" have a mandatory file flexibility "flex.xls" (see category specification 504 of the "SPRING" category 510 depicted in figure 5. As the flexibility information may not be highly relevant in the context of a procurement process, this information is presented only via a link, thereby avoiding distraction of the user and providing a better, more economic GUI for a user interested in procurement-related aspects of the items represented in the DBMS in the form of the data records.

**Figure 7** a GUI 700 for displaying data records having assigned the category "PRODUCTION SERIES A". For example, the interface application may receive a request from a user or a client application for data records representing objects to be used in a planned production series. These data objects have assigned the category "PRODUCTION SERIES A". The interface application searches the DBMS for data records of the "PRODUCTION SERIES A" category and will retrieve three data records. All three retrieved data records represent springs and have also assigned the "SPRING" category. In the depicted example, each of the three retrieved data records has assigned the "PRODUCTION SERIES A" category and the "SPRING" category. In accordance with the category specification 502 of the category node 508 for the "PRODUCTION SERIES A" category depicted in figure 5, a diagram is generated from the flex.xls data file attached to each data record (as a mandatory attribute in accordance with the category specification 504). In order to simulate or model a planned production series or production process, technical parameters such as the flexibility of a spring is highly advantageous while price information would distract the technical staff from the technically relevant parameters. The GUI 700 shows the attribute values of the returned data records in the form of a single diagram, whereby information regarding the flexibility of the different springs/data records (which is stored in the respective flex.xls files attached to the respective data records in the DBMS infrastructure) is integrated and displayed within the same diagram, thereby improving the comparability of the technical parameters, making better use of limited GUI space and avoiding errors which may arise if technical staff is overwhelmed or distracted by finance-related data. In addition, the GUI 700 comprises a table which also comprises additional attribute values such as color or price and which allows a user to obtain even more details regarding the flexibility by selecting a link to the respective flex.xls file.

The GUI 700 is much more suited for assisting technical staff in simulating, modeling, monitoring and/or controlling technical processes such as a production workflow in an industrial manufacturing context than GUI 600. Likewise, GUI 600 is much more suited to assist an employee in the purchasing department of a company to complete his or her finance-related tasks. Hence, the ability of the interface application to dynamically generate GUIs whose structure depends on the category/categories flexibly, reversibly and dynamically assigned to the data records makes the interaction of a user with the system easier and less error prone as the user is not distracted with information which may not be relevant in the respective context. The interface application and the DBMS infrastructure allows to flexibly assign and de-assign categories to and from individual data records, thereby automatically modifying the way these data records are presented without the need to modify and recompile any source code. It is easily possible to extend the system by integrating additional categories and additional GUIs/executable program routines for creating the GUIs, simply by storing an additional category in association with respective data records and by storing additional category specifications and respective executable program routines for generating a particular GUI in the DBMS infrastructure. Thereby, the system is functionally extended without risking conflicts, without the need to modify, re-compile and re-deploy existing source code such that a GUI is generated which is optimally suited for performing a new task. In particular, the additional GUI may reduce man-machine interactions and may make better use of the limited space in a GUI/display device by displaying only or predominantly those attributes and attribute values which are particularly relevant for a given category/use case scenario.

Hence, the GUIs 600 and 700 illustrate that the way identical data records are processed and displayed can be very category specific, thereby allowing to flexibly adapt and extend the way data records are processed and displayed simply by modifying the assignments of categories and respective category specifications.

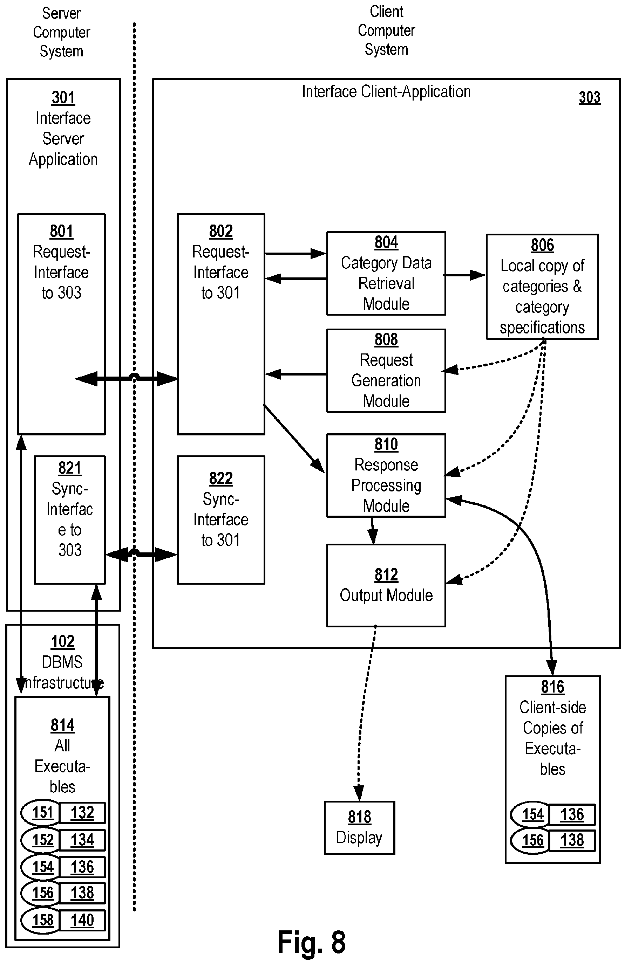

**Figure** 8 shows a further example of a distributed interface application used for operating a DBMS infrastructure based on a client-server architecture. The interface server application 301 and the interface client application 303 can be run e.g. on the server and client computer systems depicted e.g. in figures 3 or 4.

The interface server application 301 comprises a request interface 801 for receiving requests from the corresponding request interface 802 of the interface client application 303 over a network, e.g. the Internet, and to send a response to the request to the request interface 802.

The interface client application 303 can further comprise a synchronization interface 822 for requesting a copy of one or more of the executable program routines. The interface server application 301 can further comprise a synchronization interface 821 for providing a copy of one or more of the executable program routines to the requesting interface client application in dependence of the metadata assigned to the respective executable program logic. For example, interface application may be configured to store a timestamp being indicative of the time of the most recent modification of a category or category or the most recent modification of an assignment to an executable program routine in the DBMS infrastructure. So, the time of the most recent change of a category or category assignment to an executable program routine can be derived from this timestamp. The interface client application may access and analyze the timestamp assigned to the categories on a regular basis, or upon initialization or starting of the interface client application. In case the interface client application determines based on this timestamp that a category was newly created or changed at the server or a new executable was assigned to the category at the server, the interface client application is configured to request to receive a local copy of the newly created or newly assigned executable program routine. However, the copy will only be provided if the metadata of this program routine indicate that it shall be executed at the client-side. According to one example, the interface client application has read access to the metadata of the executable program routines, either directly or via the interface server application. The interface client application is configured to analyze the metadata and to request to receive a local copy of the executable program routine via the synchronization interface 822, 821 only in case the metadata indicates that the executable program routine is to be executed by the client computer. Otherwise, no copy of the executable program routine will be provided to the interface client application.

As explained already with reference to figure 1, the DBMS infrastructure of the server computer system may comprise a plurality of executable program routines stored in association with one of the categories. For example, the executable program routine can be application programs, scripts, or any other software which can be used for processing data records. Each executable program routine 132-140 may have assigned metadata 151-158.

As mentioned above, the metadata can be used for determining whether or not a copy of an executable program routine is to be copied to the interface client application ("client-side interface application") for client-side execution or not.

For example, program routine 132 can be a zip-compression program and metadata 151 may specify execution=server-side and supported-countries: countries A, B and C. Program routine 134 can be a gzip-compression program and metadata 152 may specify execution=server-side and supported-countries: countries A, B and C. Program routine 136 can be a zip-decompression program and metadata 154 may specify execution=client-side and supported-countries: countries A, B and C. Program routine 138 can be a gzip-decompression program and metadata 156 may specify execution=client-side and supported-countries: countries A, B and C.

The metadata may be beneficially used as follows: after the category "ZIPPABLE" was created and/or after a new executable program routine such as a gzip or zip (de)compression algorithm was assigned to this category, the interface client application may determine that the local, client-side copies of the categories and executable program routines may be outdated. The interface client application analyzes the metadata of the executable program routines and determines that the two de-compression routines 136 and 138 comprise the parameter "execution=client-side". As a consequence, the interface client application will selectively request and download the decompression routines 136 and 138 via the synchronization interface, but not the compression routines 132, 134.

This may have the beneficial effect that the server is enabled and configured to perform a preprocessing of the data records to be returned before they are sent over the network, thereby saving processing time. by compressing the data records before they are sent via a network via the request interface 801, 802 to the requesting client application. For example, a zip or gzip algorithm implemented in the program routines 132,134 may be employed. However, if the server uses one of these compression algorithms to compress data records of the class "ZIPPABLE", the client needs to have the corresponding decompression algorithm. The analysis of the metadata for downloading a copy of at least some of the executable program routines ensures that the client application has the necessary decompression routines and can further process and display the data.

According to some examples, the interface application is configured to evaluate the metadata of the one or more executable program routines assigned to the category of interest indicated in the received request. The metadata is evaluated to determine if the execution of the executable program routines is bound to a constraint, e.g. that the request must have been submitted from a particular geographic regions. For example, performing a compression and decompression step may help saving time in case the client computer having submitted a request for data records of a category of interest is located in a country with low network bandwidth. But if the request was submitted from a country to which a fast network connection exists, performing a compression and decompression step may actually slow down data transfer and processing. Hence, the metadata allow specifying the geographic location (or other constrains) where the respective executable program routine should exclusively be executed. This will cause the interface server application to perform the compression step selectively in case the request was received from country A, B or C as indicated in the metadata parameter "supported-countries: countries A, B and C". If the request was received from a client in country D, no compression and decompression step is executed as the network connection in country D is fast and allows to transfer the data records immediately. For example, the location of the request of the interface client application may comprise location information (IP number, time zone information or even GPS data) being indicative of the position of the client.

After the synchronization, the interface client application 303 comprises one or more copies 816 of the executable program routines 814, e.g. routines 132, 134 which are decompression routines.

The client interface application may be configured to automatically retrieve a local copy of the categories and category specifications via the interfaces 821, 822 from the interface server application via data retrieval module 804. The local copy may be retrieved e.g. upon starting of the interface client application program and/or may be synchronized with the categories and category specifications stored in the server-side DBMS infrastructure on a regular basis.

A request generation module 808 may use the local copies of the categories or category specifications for generating a request to the interface server module. For example, the request generation module 808 may generate a GUI which lists the totality of available categories based on the local copy of the categories, thereby enabling a user to generate a data request via the GUI for retrieving data records assigned to one or more categories of interest. According to another example, the request generation module may generate a GUI enabling a user to create, delete or modify a category, a data record, a category specification, an assignment of a category to a data record or to an executable program routine. The request generation module 808 may check if the newly created or modified object of the above-mentioned object types meets requirements and constraints specified in the category specification and is configured to submit a request for storing a newly created object or to modify an existing object only in case these constraints and requirements are met.

In case a request for retrieving data records assigned to one or more categories of interest was submitted by the module 808 to the interface server application, the interface server application will perform a category-based search for matching data records in the DBMS of the DBMS infrastructure. For example, a client may have submitted a query for the category "ZIPPABLE". Before executing the search, the interface server application may check if the request was submitted by an interface client application or user which has the necessary permissions to perform a search for the one or more categories specified in the request and will perform the search in the DBMS only in case the interface client application or user has the required permissions. The identified data records may be pre-processed by the interface server application. For example, the interface server application may analyze the metadata of the executable program routines of the ZIPPABLE category and may analyze context information of the request, e.g. the geographic location of the client having submitted the request. The interface server application determines that the data records to be returned should be zipped, because the request was received from a client located in country B with ah slow internet connection or because the request was received from a user having licensed the zip algorithm (or other compression, formatting or encoding algorithm which may be a proprietary or non-proprietary algorithm). Therefore, the interface server application uses the zipping routine 132 to generate one or more zip files from the returned data records and returns the one or more zip files to the interface client application The response-processing module 810 performs some further processing of the data records. For example, it may also evaluate the metadata of the local copy of the executable program routines and/or context information such as its own position in order to determine that the conditions for performing a zip-compression algorithm were fulfilled and that therefore the zip-decompression routine 136 needs to be executed. The response processing module 810 performs the zip-decompression program routine on the received ZIPPABLE data records and generates a result which is output via the output module 812. For example, the output module 812 may generate a GUI which displays the content of the retrieved data records in a category-dependent manner which is determined dynamically. For example, the GUIs depicted in figures 6 and 7 may be displayed on the display 818.

## Claims

1. An interface application (104, {301, 303}) operatively coupled to a DBMS infrastructure (102), the DBMS infrastructure comprising a DBMS (118) and comprising one or more executable program routines (132-140), the interface application being configured to:
- store (202) a plurality of categories (108-116, 508, 510, 512) in the DBMS infrastructure;
- store (204) assignments (130) of one or more of the categories to the one or more executable program routines (132-140) in the DBMS infrastructure;
- store (206) data records (120-128, 514, 516, 518) in the DBMS (102) such that each of the data records is assigned to none, one or multiple ones of the plurality of categories, whereby at least some of the database records are assigned to multiple categories;
- provide (208) an interface (144) enabling an entity (308, 303) to dynamically modify:
• the stored assignments of the categories to the data records; and
• the stored assignments of the categories to the executable program routines;
- in response to receiving a data request, use (210) the DBMS infrastructure to retrieve one or more of the data records and their respectively assigned categories which match the request;
- process (212) each of the retrieved data records with the executable program routines stored in association with the zero, one or multiple categories associated to each of the retrieved data records; and
- output (214, 600, 700) a result (602, 702, 704) of the processing.

2. The interface application of claim 1,
- wherein the executable program routines comprise one or more program routines respectively being configured for creating at least a part of a GUI,
- wherein the processing of each of the retrieved data records comprises identifying the categories assigned to the retrieved data records and generating the GUI (600, 700), the GUI being generated using one or more of the executable program routines stored in association with the identified categories; and
- wherein the outputting of the result comprises displaying attributes of the retrieved data records via the GUI parts created by the executable program routines to a user.

3. The interface application of claim 1 or 2,
- wherein the interface application is configured to automatically create a service interface for retrieving data records assigned to a particular category automatically in response to the creation and storing of the particular category in the DBMS interface, each service interface enabling a client software to submit a request for retrieving the ones of the data records having assigned the category stored in association with the program routine having created the service interface; and
- wherein the request is received by the interface application via one of the service interfaces.

4. The interface application of any one of the previous claims, wherein the categories in the DBMS infrastructure respectively have assigned a unique category-ID, wherein the interface application and/or the DBMS infrastructure is configured to create at least one database index and wherein the interface application is configured to provide a search interface enabling a search in the DBMS using one or more category-IDs as search keys and the at least one index, each index entry of the at least one index representing one of the plurality of categories and comprising pointers towards all of the data records having assigned the one category.

5. The interface application of any one of the previous claims, wherein the categories in the DBMS infrastructure respectively have assigned a unique category-ID, wherein the interface application is configured to:
- determine that the totality of data records in the DBMS respectively having assigned all of two or more category-IDs exceed a threshold criterion;
- if the threshold criterion is exceeded, trigger the creation of a category-ID referred to as intersectional category-ID as a function of the two or more category-IDs;
- check if the intersectional category-ID already exists in the DBMS infrastructure;
- if and only if the intersectional category-ID does not yet exist in the DBMS infrastructure and if the totality of data records in the DBMS respectively having assigned the two or more category-ID exceed the threshold criterion:
• automatically create a new category and store the newly created category in association with the created intersectional category-ID in the DBMS infrastructure, the created category representing an intersection of all of the two or more categories;
• assign the intersectional category-ID to the data records determined to have assigned all of the two or more category-IDs; and
• use the intersectional category-ID for searching the data records in the DBMS for data records respectively having assigned all the two or more categories.

6. The interface application of any one of the previous claims,
- wherein the executable program routines comprise one or more application programs being installed or stored on a client computer system having submitted the request and/or being installed or stored on a computer system running the interface application;
- wherein the processing of each of the retrieved data records comprises identifying the one or more categories assigned to the retrieved data record, identifying one or more executable program routines stored in association with each of the identified categories of said retrieved data record, and causing the one or more application programs which are comprised in the one or more identified executable program routines to process the data record

7. The interface application of any one of the previous claims,
- wherein the DBMS infrastructure comprises category specifications of the plurality of categories, each category specification of a respective category being indicative of one or more of: attribute definitions which describe valid attributes of data records having assigned the respective category; value-checking-rules; allowable attribute value ranges assigned to respective ones of the valid attributes; access-control rules being indicative of the one or more entities allowed to read and/or store data records assigned to this category; routine-execution-control rules being indicative of the one or more entities allowed to trigger the execution of the one or more program routines assigned to this category; relation definitions being indicative of one or more types of relations between data records allowed by the interface application given the categories assigned to the data records.

8. The interface application of claim 7, wherein the interface application is configured to:
- receive user input data or automatically generated input data, the input data comprising a plurality of attributes, attribute values and an indication of at least one of the plurality of categories;
- analyze the category specifications for identifying one or more valid attributes of the at least one indicated category;
- create a new data record, the new data record having assigned the at least one indicated category and selectively comprising the ones of the attributes and respective attribute values which represent one of the identified valid attributes; and
- store the new data record in the DBMS.

9. The interface application of claim 7 or 8, wherein the interface application is configured to:
- receive user input data or automatically generated input data, the input data comprising a plurality of attributes, attribute values and an indication of at least one of the plurality of categories;
- analyze the category specifications for identifying one or more valid attributes of the at least one indicated category and for identifying the value-checking-rules and/or predefined attribute value ranges assigned to the identified valid attributes;
- if and only if the received attribute value represents one of the valid attributes of the indicated category and complies with the value-checking-rules assigned to this valid attribute and is within the predefined allowable attribute range assigned to this valid attribute: create a new data record, whereby a received attribute value is used as attribute value of the new data record; and store the new data record in the DBMS;
- if the received attribute value does not comply with the value-checking-rules assigned to this valid attribute and/or is outside of the predefined allowable attribute range assigned to this valid attribute: throw an error and/or not create and store a new data record.

10. The interface application of any one of claims 7-9, wherein the interface application is configured to:
- receive user input data or automatically generated input data, the input data comprising an indication of at least one type of relation to be created between a first data record having a first one of the categories and at least one second data record having a second one of the categories;
- analyze the category specifications for determining if the at least one type of relation is an allowed type of relation in accordance with the predefined allowed relations specified in the category specifications of the first and the second category; and
- if and only if the at least one type of relation was identified to be an allowable type of relation in the analysis create the relation between the first and the second data record and store the created relation in the database.

11. The interface application of any one of claims 7-10, wherein the interface application is configured to:
- in response to the storing of a new predefined type of relation in the DBMS infrastructure, automatically creating or modifying an existing search interface such that the search interface enables an entity to perform a relation-type based search in the DBMS for data records having assigned a searched relation type.

12. The interface application of any one of claims 7-11,
- wherein the processing of each of the retrieved data records comprises identifying the categories assigned to the retrieved data records and analyzing the category specifications of the identified categories for identifying the valid attributes of the retrieved data records; and wherein the outputting of the result comprises outputting the attributes of the retrieved data records if and only if they are valid attributes of the categories assigned to the retrieved data records.

13. The interface application of any one of the previous claims 7-12,
- wherein the processing of each of the retrieved data records comprises identifying the categories assigned to the retrieved data records and analyzing the category specifications of the identified categories for identifying the access control rules and/or routine-execution rules specified in the analyzed category specifications; and
- wherein the processing of each of the retrieved data records with the executable program routines comprises:
• checking if the entity having submitted the request is allowed to read and/or write the retrieved data records in accordance with the access control rules in the category specification of the category assigned to said data record, and granting access to the retrieved data records only in accordance with the access control rules; and/or
• checking if the entity having submitted the request is allowed to trigger the execution of the executable program routines stored in association with the category assigned to said data record in accordance with the routine-execution rules in the category specification of the category assigned to said data record, whereby the triggering of any one of said program-routines stored in association with the category is prohibited by the interface application if the entity is determined not to be allowed.

14. A distributed computer system comprising a server computer system and one or more client computer systems,
- wherein the server computer system comprises the DBMS infrastructure and comprises a server-side part of the interface application according to any one of the previous claims, the server-side part being referred to as interface server application,
- wherein each client computer system comprises a local copy (806) of the categories originally stored in the DBMS infrastructure and comprising a local copy (816) of one or more of the executable program routines (814) originally stored in the DBMS infrastructure, wherein each client computer system further comprises a client-side part of the interface application according to any one of the previous claims, the client-side part being referred to as interface client application,
- wherein the interface client applications and the interface server application comprise a synchronization interface (821, 822) configured to automatically synchronize the local copies of the categories and of the executable program routines,
- wherein the synchronization is performed only for the ones of the executable program routines in the DBMS infrastructure which have assigned metadata indicating that the executable program routines is to be executed on the client computer system,
- wherein at least one of the executable program routines used for the processing of the retrieved data records is executed by the client computer system and is a local, client side copy of an executable program routine originally stored in the DBMS infrastructure.

15. The distributed computer system of claim 14,
- wherein one or more first ones of the executable program routines in the DBMS infrastructure have assigned metadata indicating that the first executable program routines are to be executed on the server computer system, whereby the one or more first executable program routines are selected from a group comprising:
a) data compression routines;
b) data encoding routines;
c) data formatting routines;
d) a mixture of two or more of a), b) and c) first executable program routines.
- wherein one or more second ones of the executable program routines in the DBMS infrastructure have assigned metadata indicating that the second executable program routines are to be executed on the client computer system, whereby the one or more second executable program routines are selected from a group comprising:
a) data de-compression routines;
b) data decoding routines;
c) data interpreting routines;
d) a mixture of two or more of a), b) and c) second executable program routines.
- wherein the first executable routines and the second executable program routines of the same type a), b) or c) preferably are complementary to each other.
- wherein the processing of the retrieved data records comprises performing at least one of the first executable program routines by the server computer system and performing one of the second executable program routines being complementary to the executed at least one first executable program routine by one of the client computer systems.

16. A method for operating a DBMS infrastructure (102), the method being implemented by an interface application (104, {301, 303}) operatively coupled to the DBMS infrastructure, the DBMS infrastructure comprising a DBMS (118) and comprising one or more executable program routines (132-140), the method comprising:
- storing (202) a plurality of categories (108-116, 508, 510, 512) in the DBMS infrastructure;
- storing (204) assignments (130) of one or more of the categories to one or more executable program routines (132-140) in the DBMS infrastructure;
- storing (206) data records (120-128, 514, 516, 518) in the DBMS (102) such that each of the data records is assigned to none, one or multiple ones of the plurality of categories, whereby at least some of the database records are assigned to multiple categories;
- providing (208) an interface (144) enabling an entity (308, 303) to dynamically modify:
• the stored assignments of the categories to the data records; and
• the stored assignments of the categories to the executable program routines;
- in response to receiving a request, using (210) the DBMS infrastructure to retrieve one or more of the data records and their respectively assigned categories which match the request;
- processing (212) each of the retrieved data records with the executable program routines stored in association with the zero, one or multiple categories associated to each of the retrieved data records; and
- outputting (214, 600, 700) a result (602, 702, 704) of the processing.
